# EUROPEAN PATENT SPECIFICATION

(11) **EP 2 317 179 B1**
(45) Date of publication and mention of the grant of the patent: **26.09.2012**
(21) Application number: 10386014.4
(22) Date of filing: 05.10.2010
(51) Int. Cl.: F16H 48/12

(54) **Differential of automatic alterations of folding rhomb**
Differential automatischer Alterationen einer Faltraute
Différentiel d'altérations automatique de losange pliant

(30) Priority: 27.10.2009 GR 20090100587
(43) Date of publication of application: 04.05.2011
(73) Proprietor: Stefanou, Loizos, 157 73 Zografos Attikis (GR)
(72) Inventor: Stefanou, Loizos, 157 73 Zografos Attikis (GR)

(56) References cited:
- FR-A- 934 956
- GB-A- 163 112
- US-A- 845 409
- US-A- 1 434 063
- US-A- 1 453 909

## Description

The invention concerns the technical field of applications of differential. GB163112 discloses a differential accorting to the preamble of claim 1.

The differential is a cluster of interconnected elements, which execute coordinated relative motions between them.

It consists, on the one hand of a shell which is a combination of other elements that are fitted and tightened sufficiently between them by screws or other means, in order to constitute unified solid body, which externally ends in form of pulley and on the other hand of a number of internal parts inside the shell of which others are immovable and others are mobile parts in relation to it.

It is based on either side on two external immovable bearings that allow to it only a rotary motion, to both rotation directions, around its central imaginary rotation axis.

It is interlinked with the external surroundings, on the one hand via two of the internal parts which end in form of spindle receptors, and on the other hand via the external pulley of the shell.

The spindle receptors are based inside the shell, with their sockets turned outside in opposite directions the one of the other, in bearings that allow them only rotary motions in relation to the shell, around the central imaginary rotation axis, in both rotation directions. Each of the two spindle receptors is meshed mechanically with a corresponding external spindle in order to be able to rotate at the same speed with it, but without possibility for a relative motion between this and the corresponding to it, external spindle.

The external pulley of the shell is meshed mechanically with an external source of mechanical power.

During the operation of the differential, the external source of mechanical power applies to it, via the external pulley of the shell, a torque because of which the differential is set in rotary motion, thus receiving mechanical power.

The differential applies then, via the spindle receptors, mechanical actions in the form of torques, on both external spindles. The external spindles offer mechanical reactions, proportional to their kinematical requirements, against the mechanical actions which the spindle receptors apply to them.

Through this process, the differential sets the external spindles in rotary motions around the central imaginary rotation axis, giving them, through this manner, the mechanical power that is being received.

The relative positions and speeds, between the shell and the internal parts, are being automatically and continuously readjusted so that the division of power to the external spindles and the corresponding rotation speeds ratio of them, which satisfies their kinematical requirements, are being perpetually achieved

The differential is used mainly for division and transport of the mechanical power of the vehicles, which receives from the motive machine or other source, to the wheels or the caterpillars, with the intention of achieving a smooth and safe rectilinear or curved motion.

However, for the same purpose, it can also be used for division of the mechanical power in the helixes of navigable ships or aircrafts.

It can also be used for the variation of division of the mechanical power in various systems, as in two stirrers of liquids or in two pumps of fluid, like the firefighting systems and the irrigation arrangement as well as in other applications.

The differential which is used according to the previous level of technique, is the planetary, on which because of its principle of operation, it is necessary that its basic internal parts be toothed conical wheels which are known, others as planets and others as satellites and via which the mechanical power, that enters in this, is being transported to the external spindles.

The disadvantages of this differential are the important deteriorations, losses of power, overheating and the requirement of applying measures of maintenance, which are caused by the inevitable frictions of the toothed wheels.

In the structure of differential of automatic alterations of folding rhomb, are included the shell and the internal parts.

The basic constitutive parts of the shell are the core (219), inside of which occur the internal parts, the two lids (210) and (212) on either side of the core, which end as hubs (199a) and (199b), inside which the spindle receptors (175a) and (175b) and the external pulley are based, when this is a separate constitutive part.

The external pulley can be a separate constitutive element or it can be peripheral ending of the one lid, corresponding to the lid (210), with which, in this case, it will constitute a unified, continuous and solid element.

Inside the shell exist, on the one hand an oblong mechanical driver, fastened and immovable in relation to it, and on the other hand mobile parts.

The oblong mechanical driver is possible to consist of rectilinear rods parallel between them, as the (162a), (162b), (162c), (162d), (162e) and (162f), and on it meshed mobile parts can be based. Its specification is to allow them only a rectilinear shift, which is reciprocating and on imaginary straight line, which is stationary in relation to the oblong mechanical driver and intersects transversely the central imaginary rotation axis (236).

The level, which the imaginary straight line and the central imaginary rotation axis (236) define, is named as imaginary level of oblong shift.

Between the mobile parts are included four rods (25a), (55a), (25b) and (55b) of the same length (L1), which are articulated sequentially between them as closed serie, through permanent articulations, which allow rotations between the articulated rods on them, around their corresponding imaginary rotation axes (146a), (180a), (146b) and (180b), which are parallel to the central imaginary rotation axis (236), shaping thus a closed chain by four rods through four articulations, which has the shape of rhomb and is called complex of mobile parts of the shape of rhomb.

In the complex of mobile parts of the shape of rhomb is added an additional fifth rod, of the same length (L1) with every one of the first four, the one end of which is articulated exactly in the middle of the rod (55a) and the other exactly in the middle of the rod (55b) which is parallel to (55a), through permanent articulations, which allow rotations between the articulated rods on them, around their corresponding imaginary rotation axes (97a) and (119a) which are parallel to central imaginary rotation axis (236).

We clarify that every one of the above five rods, before the elements of its articulations are installed in it, since its construction it can be a separate, unified and solid element, or a combination of other partial structural elements, which together constitute an unified and solid element, as the elements (109) and (120) which it is possible to constitute the fifth rod, also to have endings of forms as the pivots for articulation or seating in other parts. In addition to that, as length of each rod we consider the distance of the imaginary rotation axes of the two articulations which it has on its ends, while as shape of rhomb is comprehended the depiction of the projections of the lengths of the four rods (25a), (55a), (25b) and (55b) on a level which is always parallel to them and perpendicular to the central imaginary rotation axis (236), because the rods, as material objects and consequently third-dimensional constructions, they cannot be defined on a level.

Other mobile parts are two similar cranks (181 a) and (181 b), each one of which consists of the arm in the ends of which exist endings of pivots whose imaginary rotation axes are parallel to the central imaginary rotation axis (236) and the distance between them is equal to the radius (R) of the crank, which corresponds to the arm.

The length of radius (R) of each crank (181a) and (181b) is smaller than the length (L1) of every rod (25a), (55a), (25b) and (55b) of the complex of mobile parts of the shape of rhomb.

The pivot (175a) of the crank (181a) and the corresponding pivot (175b) of the crank (181b) further their form and use as pivots, simultaneously they are the two spindle receptors and the specification of each one of them is receiving a torque, via the arm of the crank to which it belongs, and transporting it to the corresponding external spindle.

The pivot (165a) of the crank (181a) and the corresponding pivot (165b) of the crank (181b) are the rotation axes of the two articulations of the complex of mobile parts of the shape of rhomb which are selected so that they occur on the two ends of the one diagonal of the complex of mobile parts of the shape of rhomb which is called diagonal of cranks. The other diagonal is called diagonal of oblong shift.

The total of the necessary mobile parts is supplemented with the seating bases (157a) and (157b). These are based as meshed mobile parts on the oblong mechanical driver, being confined in the motions, which the specification of the oblong mechanical driver defines. The seating basis (157a) has built-in the pivots (141aa) and (141ba) of the one articulation and the seating basis (157b) has built-in the pivots (141ab) and (141bb) of the other articulation of the complex of mobile parts of the shape of rhomb, which occur on the ends of the diagonal of oblong shift. The positions of the pivots (141aa) and (141ba) and of the pivots (141ab) and (141bb), of these articulations, confine the imaginary rotation axes (146a) and (146b) always to occur on the imaginary level of oblong shift.

The available length of the oblong mechanical driver is bigger than the double sum of the length (R) of the radius of one of the cranks (181 a) and (181b) and the length (L1) of one of the rods (25a), (55a), (25b) and (55b) of the complex of mobile parts of the shape of rhomb.

The complex of mobile parts of the shape of rhomb undergoes application of forces and moments so that it undergoes alterations at the process of which the fifth rod obligates it to keep the shape of rhomb or, in the extreme case of its complete retraction, the six imaginary rotation axes (146a), (146b), (180a), (180b), (97a) and (119a) of all its parts, to occur on the imaginary level of oblong shift, never however to have another shape.

The final result which is achieved at the operation of the present invention is: the mechanical power which the external pulley of the shell receives from the external source of the mechanical power, is being transported from there sequentially, via the oblong mechanical driver, via the seating bases (157a) and (157b) of the articulations of diagonal of oblong shift, via the rods of the complex of mobile parts of the shape of rhomb, via the pivots (165a) and (165b) of the articulations of the diagonal of cranks and via the arms of the cranks, to the spindle receptors (175a) and (175b) which divide and distribute it to the external spindles, setting them in rotation, with a rotation speeds ratio which always satisfies their kinematical requirements and which the present invention ensures perpetually by continuous and automatic readjustment of the momentary relative positions and speeds between the shell and the internal parts.

For avoidance of distortions of the internal parts of the shell, the fifth rod is possible to be articulated in its middle with a seating basis (96). The seating basis (96) is based as meshed mobile part on the oblong mechanical driver, being confined in the motions which the specification of the oblong mechanical driver defines. This articulation allows the relative rotation between the fifth rod and the oblong mechanical driver around the corresponding imaginary rotation axis (71) of this articulation, which is parallel to the central imaginary rotation axis (236) and always occurs on the imaginary level of oblong shift.

All the articulations in which participate the four rods (25a), (55a), (25b) and (55b) of the complex of mobile parts of the shape of rhomb, the fifth rod, the seating basis (96) as well as the two seatings of the spindle receptors (175a) and (175b), they are realized through the use of annular actinic rolling bearings or actinic slipping bearings in order that the direct contact between the mobile parts which realize relative rotary motions between them is being excluded and their frictions are thus minimized.

All seatings of the seating bases (157a) and (157b) and of the seating basis (96), when this exists, on the oblong mechanical driver aiming at the realization of the motions which defines the specification of the oblong mechanical driver, are realized through the use of linear rolling bearings, in order that the direct contact between the mobile parts which realize relative oblong motions between them is being excluded and their frictions are thus minimized.

The external pulley of the shell is possible to be toothed, known on the previous level of technique with the name of sun and with the name of crown and its mesh with the external source of mechanical power becomes via an also toothed pulley, known on the previous level of technique with the name of pinion, which belongs to the external source of mechanical power.

The external pulley of the shell is possible to have a form of toothed chain wheel and its mesh with the external source of mechanical power becomes via a closed chain.

The external pulley of the shell is possible to have a form of drum with or without external peripheral grooves and its mesh with the external source of mechanical power becomes via endless belts.

The principle of operation of differential of automatic alterations of folding rhomb is described as below:

When the differential of automatic alterations of folding rhomb is installed and receives a torque, it will acquire rotary motion around the central imaginary rotation axis (236) and a corresponding mechanical power. Then the spindle receptors (175a) and (175b) will apply mechanical actions in the form of torques on the external spindles and these will offer their mechanical reactions, which are corresponding to their kinematical requirements.

Then, if the kinematical requirements of the external spindles require equal rotation speeds of the spindle receptors (175a) and (175b), all the parts of the differential of automatic alterations of folding rhomb will be keeping stationary relative positions between them, the external spindles which mesh with the spindle receptors will be having same rotation speeds with the shell and, in this case, if the differential of automatic alterations of folding rhomb is installed in a vehicle, the vehicle will be following a straight route.

If, however, the kinematical requirements of the external spindles require unequal rotation speeds of the spindle receptors (175a) and (175b), then the pivots (165a) and (165b) of the cranks (181a) and (181b) will be following circular motions with unequal rotation speeds around the central imaginary rotation axis (236), but with equal and opposite rotation speeds in relation to the shell, which also is being rotated. In this case, if the differential of automatic alterations of folding rhomb is installed in a vehicle, the vehicle will be following a curved route. These motions will be causing continuous variations of the corners between the rods (25a), (55a), (25b) and (55b) of the complex of mobile parts of the shape of rhomb and alterations on its form as well as continuous rectilinear reciprocating motions of the articulations, which are based on the oblong mechanical driver, via the seating bases (157a), (157b) and (96).

At the time points where the geometrical axes of the pivots (165a) and (165b) of the cranks (181a) and (181b) will being coincided, we will be having the extreme case of the complete retraction, where the imaginary rotation axes, of all the elements, will occur on the imaginary level of oblong shift. This is the momentary phase at which the fifth rod will respond to its destination so that, at the next alteration, the arms of the cranks to do opposite rotary motions in relation to the shell and the complex of mobile parts of the shape of rhomb to acquire again a shape of rhomb, instead of another shape.

At the time points where the arms of the cranks will be shaping a corner of 180 degrees between them, the complex of mobile parts of the shape of rhomb will be in complete stretch. This is the momentary phase at which the need that the length of radius (R) of each crank to be smaller than the length (L1) of every one of the four rods of the complex of mobile parts of the shape of rhomb is shown.

Advantages of the present invention are the minimization of deteriorations, of the losses of power, of the overheating and the measures of maintenance which are disadvantages of the previous level of technique, because between the internal mobile parts of the new invention, toothed wheels are not included, but elements with articulations and seatings which are realized by rolling bearings or in the worse case by slipping bearings, via which, the mechanical power is being transported.

In the numbered drawings, which follow, the necessary depictions of the constitutive parts of the invention are presented. For brevity's sake, the descriptions become through the names of the technical characteristics of each object which is depicted.

The form of each object as is depicted in the drawings, as well as its assembly of partial constitutive elements, is only indicative and it has as intention to show the possibility of making and working of the invention through the example, which follows.

These depictions do not exclude the free redesigning of the objects, with the presupposition that the invention can be made of them and works through the manner which is revealed in the present texts.

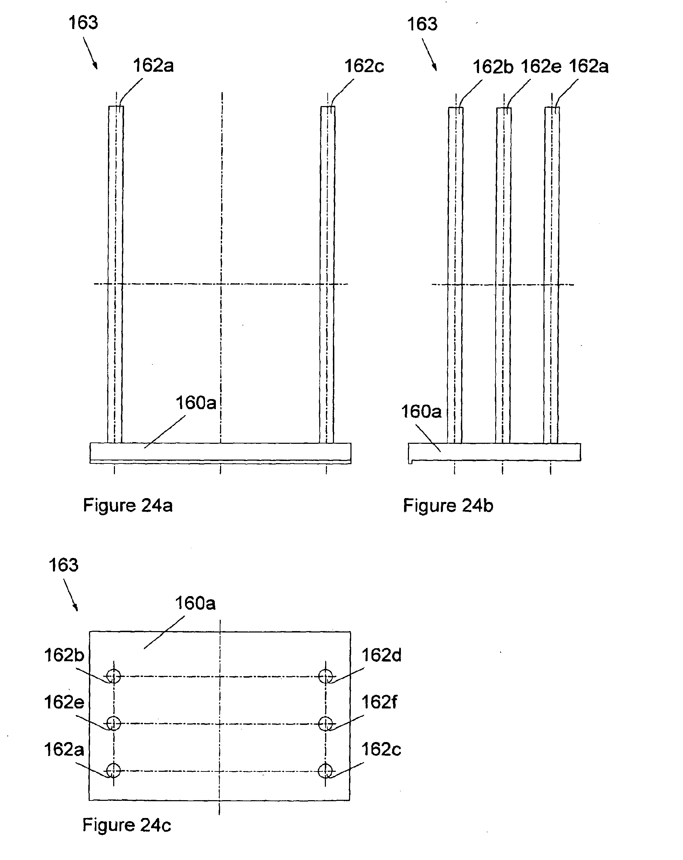

The depictions of the figures 24a, 24b, 24c, 25a, 25b, 26a, 26b, 31a, 31b, 32a, 32b, 32c, 33a, 33b, 39a, 39b, 40a, 40b, 41a, 41b, 42a, 42b and 43 are presented with scale of drawing 1:2 while the rest are presented with scale of drawing 1:1.

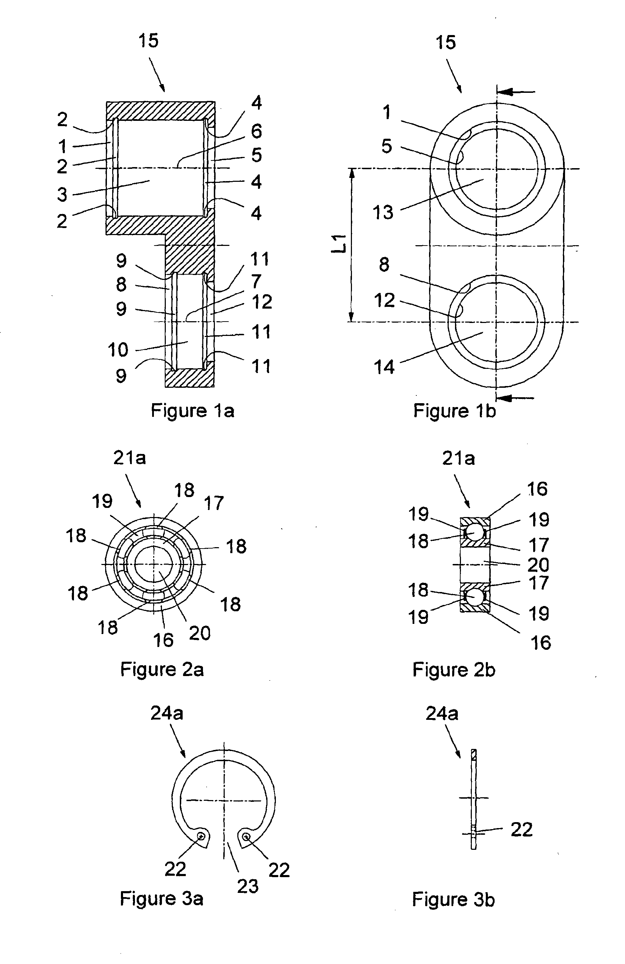

Figure 1a depicts in cross section view the rod of rhomb with two articulations (15) before the installation of rolling bearings in it, where the following partial technical characteristics appear:
Cylindrical orifice (1) of entry of the rolling bearing (21a) which is depicted in figures 2a and 2b, as well as of the (21 b) and (21 c) which are reported below,
Peripheral groove (2) of installation of the basis retaining ring (24a), which is depicted in figures 3a and 3b, which are reported below,

Cylindrical chamber (3) of installation of the rolling bearings (21a), (21 b) and (21c), Peripheral groove (4) for successful installation of the rolling bearing (21 c),
Edge (5) of the limit of cylindrical chamber (3),
Imaginary rotation axis (6) of the first articulation of the rod (15),

Imaginary rotation axis (7) of the second articulation of the rod (15),

Cylindrical orifice (8) of entry of the rolling bearing (21d), which is reported below,
Peripheral groove (9) of installation of the basis retaining ring (24b), which is reported below,
Cylindrical chamber (10) of installation of the rolling bearing (21 d),
Peripheral groove (11) for successful installation of the rolling bearing (21d),
Edge (12) of the limit of the cylindrical chamber (10),

Figure 1b depicts in front view the object (15), where appear further the following partial technical characteristics:
Passing through hole (13) of installation of the structural elements of the first articulation of the rod (15),
Passing through hole (14) of installation of the structural elements of the second articulation of rod (15),
Distance (L1) of the centers of the holes (13) and (14) of the rod (15), which is equal to the distance of the corresponding imaginary rotation axes (6) and (7),

Figure 2a depicts in front view the single row, annular, rolling ball bearing (21a), where the following partial technical characreristics appear:
Outer ring (16) of the rolling bearing (21a),
Inner ring (17) of the rolling bearing (21a),
Rolling elements (18) of the rolling bearing (21 a),
Cage (19) of the rolling bearing (21a),
Hole (20) of the inner ring of the rolling bearing (21a).

Figure 2b depicts in cross section view the object (21 a). The objects (21 b), (21 c), (21 d), (21 e), (21f), (21 g), (21 h) and (21 i), which are reported in other points of text, are similar to (21 a).

Figure 3a depicts in front view the basis retaining ring (24a), where the following partial technical characreristics appear:
Shrinkage handling holes (22) of the basis retaining ring (24a),

Interstice (23) of the basis retaining ring (24a).

Figure 3b depicts in cross section view the object (24a).
The objects (24b), (24c), (24d) and (24e), which are reported in other points of the text, are similar to (24a).

Figure 4a depicts the assembly arrangement of the objects (15), (21 a), (21 b), (21 c), (21 d), (24a) and (24b), which were reported above, which after they are assembled they will constitute the first rod of rhomb with two articulations (25a) in its final structure, which is depicted in figure 4b.

Figure 4b depicts in cross section view the object (25a), where appear further the following partial technical characteristics: Imaginary rotation axis (6a) of the first articulation of the rod (25a),
Imaginary rotation axis (7a) of the second articulation of the rod (25a).

Figure 4c depicts in front view the object (25a), where appear further the following partial technical characteristics:
Hole (13a) of the inner rings of the rolling bearings (21a), (21b) and (21 c),
Hole (14a) of the inner ring of the rolling bearing (21 d),

Figure 4d depicts in back view the object (25a).
The object (25b), which is reported in other points of the text, is similar to (25a).

Figure 5a depicts in cross section view the rod of rhomb with three articulations (46) before the installation of rolling bearings in it, where the following partial technical characteristics appear:
Edge (26) of the limit of the cylindrical chamber (28),
Peripheral groove (27) for successful installation of the rolling bearing (21 e),
Cylindrical chamber (28) of installation of the rolling bearing (21e), (21f) and (21 g),
Peripheral groove (29) of installation of the basis retaining ring (24c),

Cylindrical orifice (30) of entry of the rolling bearings (21e), (21f) and (21g),
Imaginary rotation axis (31) of the first articulation of the rod (46),

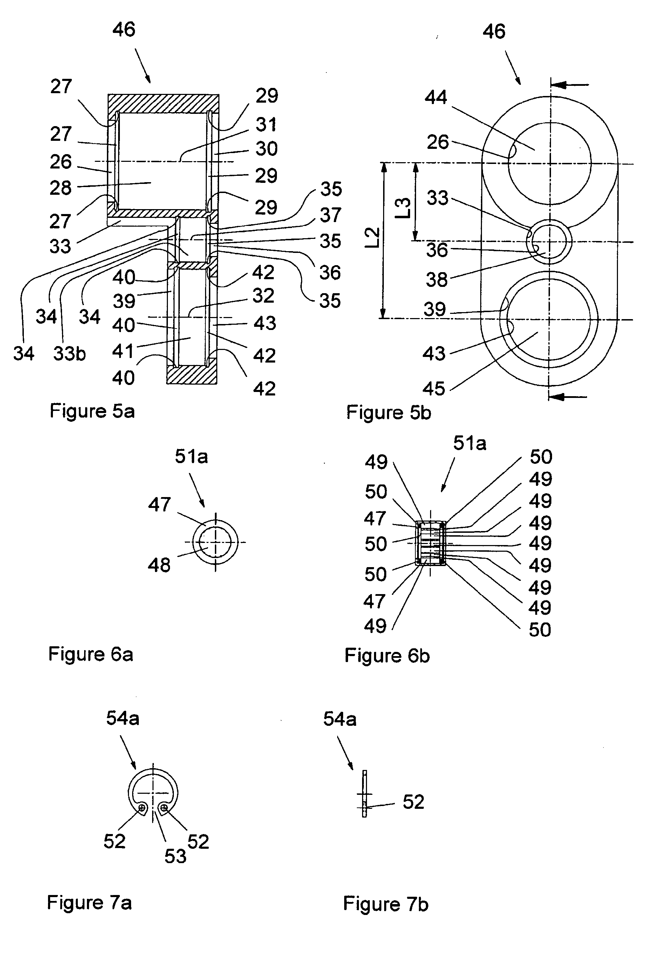

Imaginary rotation axis (32) of the second articulation of the rod (46),
Cylindrical orifice (33) of entry of the rolling bearing (51a), which is depicted in figures 6a and 6b, which are reported below,
Cylindrical chamber (33b) of installation of the rolling bearing (51a), Peripheral groove (34) of installation of the basis retaining ring (54a), which is depicted in figures 7a and 7b, which are reported below,

Peripheral groove (35) for successful installation of the rolling bearing (51a),
Edge (36) of the limit of the cylindrical chamber (33b),
Imaginary rotation axis (37) of the middlemost articulation of the rod (46),

Cylindrical orifice (39) of entry of the rolling bearing (21 h),
Peripheral groove (40) of installation of the basis retaining ring (24d),

Cylindrical chamber (41) of installation of the rolling bearing (21 h), Peripheral groove (42) for successful installation of the rolling bearing (21 h),
Edge (43) of the limit of the cylindrical chamber (41),

Figure 5b depicts in front view the object (46), where further the following partial technical characteristics appear:
Passing through hole (38) of installation of the structural elements of the middlemost articulation of the rod (46),
Passing through hole (44) of installation of the structural elements of the first articulation of the rod (46),
Passing through hole (45) of installation of the structural elements of the second articulation of the rod (46),
Distance (L2) of the centers of the holes (44) and (45) of the rod (46), which is equal to the distance of the corresponding imaginary rotation axes (31) and (32), where (L2) is equal to (L1),
Distance (L3) of the centers of the holes (44) and (38) of the rod (46), which is equal to the distance of the corresponding imaginary rotation axes (31) and (37) of the rod (46), where (L3) is equal to the half of (L2).

Figure 6a depicts in front view a needle roller bearing (51a), without inner ring, where the following partial technical characteristics appear:
Outer ring (47) of the rolling bearing (51a),
Hole (48) for entry of a pivot in the rolling bearing (51 a).

Figure 6b depicts in cross section view the object (51a), where appear further:
Rolling elements (49) of the rolling bearing (51 a),
Cage (50) of the rolling bearing (51 a),

Figure 7a depicts in front view a basis retaining ring (54a), where the following partial technical characreristics appear:
Shrinkage handling holes (52) of the basis retaining ring (54a),
Interstice (53) of the basis retaining ring (54a).

Figure 7b depicts in cross section view the object (54a).

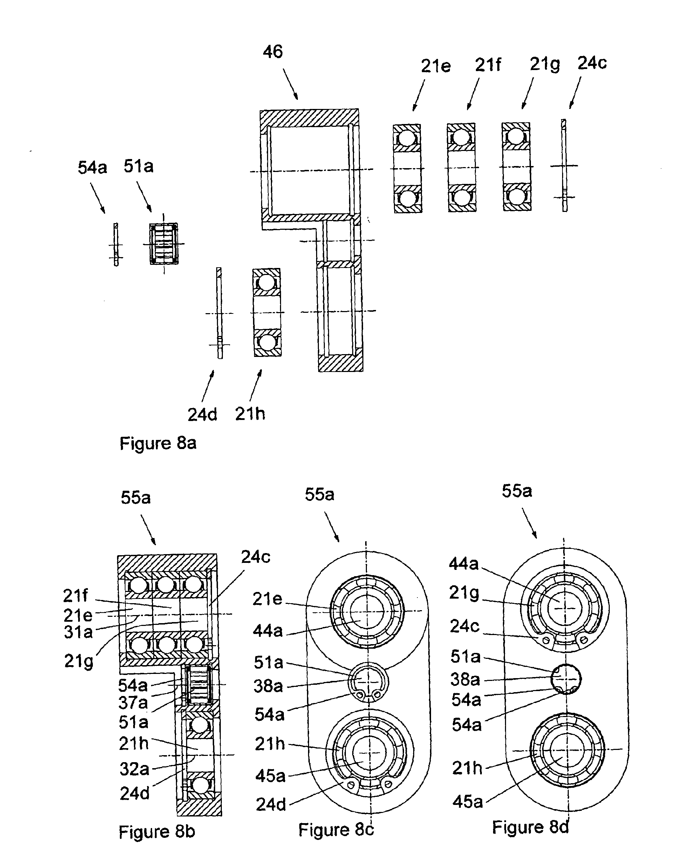

Figure 8a depicts the assembly arrangement of the objects (46), (21e), (21f), (21g), (21h), (24c), (24d), (51a) and (54a) which were reported above, which after they are assembled they will constitute the first rod of rhomb with three articulations (55a) in its final structure, which is depicted in figure 8b.

Figure 8b depicts in cross section view the object (55a), where further the following partial technical characteristics appear:
Imaginary rotation axis (31a) of the first articulation of the rod (55a),
Imaginary rotation axis (32a) of the second articulation of the rod (55a),
Imaginary rotation axis (37a) of the middlemost articulation of the rod (55a).

Figure 8c depicts in front view the object (55a), where further the following partial technical characteristics appear:
Hole (38a) of entry of a pivot in the rolling bearing (51a),
Hole (44a) of the inner rings of the rolling bearings (21e), (21f) and (21g),
Hole (45a) of the inner ring of the rolling bearing (21 h).

Figure 8d depicts in back view the object (55a).
The object (55b), which is reported in other points of the text, is similar to (55a).

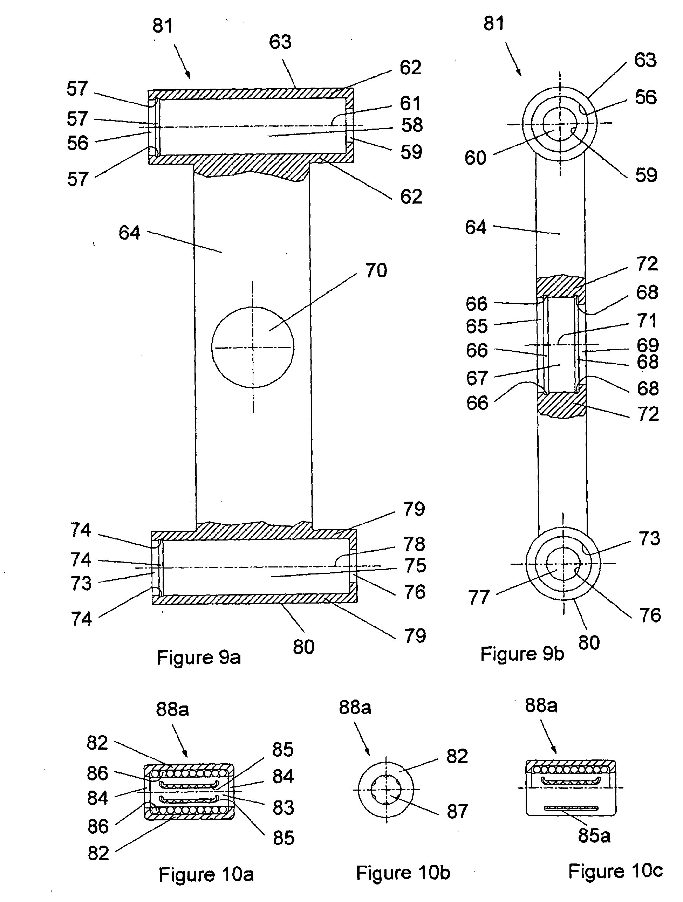

Figure 9a depicts in front view the seating basis (81) of the middlemost articulation of the fifth rod on the oblong mechanical driver, before the installation of the rolling bearing (21 i) of the middlemost articulation and of the linear bearings in it, where the following partial technical characreristics appear:
Cylindrical orifice (56) of entry of the linear rolling bearings (88c) and (88d), which are reported below,
Peripheral groove (57) of installation of the basis retaining ring (95b), which is reported below,
Cylindrical chamber (58) of installation of the linear rolling bearings (88c) and (88d),
Edge (59) of the limit of the cylindrical chamber (58),
Imaginary geometrical axis (61) of the cylindrical chamber (58),
Partial section (62) of the first seating head (63),
First seating head (63),
Trunk (64) of the object (81),
Passing through hole (70) of installation of the seating structural elements of the middlemost articulation of the fifth rod,
Cylindrical orifice (73) of entry of the linear rolling bearings (88a) and (88b),
Peripheral groove (74) of installation of the basis retaining ring (95a),

Cylindrical chamber (75) of installation of the linear rolling bearings (88a) and (88b),
Edge (76) of the limit of the cylindrical chamber (75),
Imaginary geometrical axis (78) of the cylindrical chamber (75),
Partial section (79) of the second seating head (80),
Second seating head (80).

Figure 9b depicts in left side view the object (81), where further the following partial technical characteristics appear:
First passing through hole (60) of installation of the seating structural elements of the object (81),
Cylindrical orifice (65) of entry of the rolling bearing (21 i),
Peripheral groove (66) of installation of the basis retaining ring (24e),

Cylindrical chamber (67) of installation of the rolling bearing (21i),
Peripheral groove (68) for successful installation of the rolling bearing (21i),
Edge (69) of the limit of the cylindrical chamber (67),
Imaginary rotation axis (71) of the middlemost articulation of the fifth rod,

Partial section (72) of the middlemost articulation of the fifth rod,
Second passing through hole (77) of installation of the seating structural elements of the object (81).

Figure 10a depicts in cross section view the linear rolling ball bearing (88a), where the following partial technical characreristics appear:
Outer sleeve (82) of the linear rolling bearing (88a),
Inner sleeve (83) of the linear rolling bearing (88a),
Orifice (84) of the outer sleeve of the linear rolling bearing (88a),
Oblong apertures (85) of the inner sleeve of the linear rolling bearing (88a),
Rolling elements (86) of the linear rolling bearing (88a).

Figure 10b depicts in front view the object (88a), where appears further:
Hole (87) of passing of a rod in the linear rolling bearing (88a).

Figure 10c depicts in half section view the object (88a), where appears further:
Oblong aperture (85a) of the outer sleeve of the linear rolling bearing (88a).
The objects (88b), (88c), (88d), (88e), (88f) and (88g), which are reported in other points of the text, are similar to (88a).

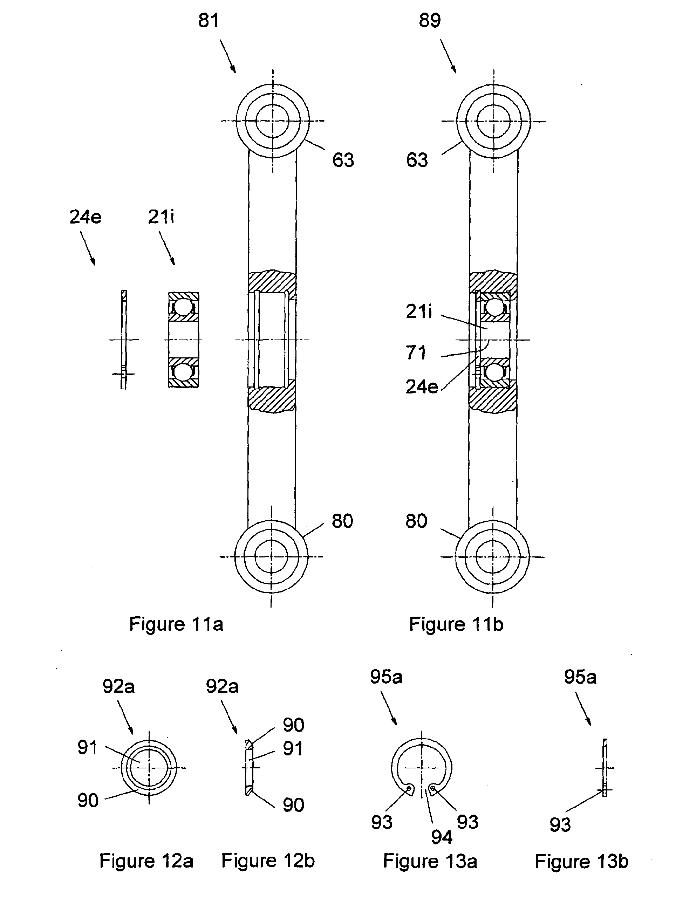

Figure 11 a depicts the assembly arrangement of the objects (81), (21i) and (24e), which were reported above, which after they are assembled they will constitute the object (89), which is depicted in figure 11b.

Figure 11b depicts in left side view the seating basis (89) of the middlemost articulation of the fifth rod on the oblong mechanical driver, which resulted from the object (81) after the installation of the rolling bearing of the middlemost articulation of the fifth rod and before the installation of the linear bearings in it.

Figure 12a depicts in front view a ring (92a) for successful installation of linear rolling bearings, where the following partial technical characreristics appear:
Conical surface (90) of the ring (92a),
Hole (91) of the ring (92a).

Figure 12b depicts in cross section view the object (92a).
The objects (92b), (92c) and (92d), which are reported in other points of the text, are similar to (92a).

Figure 13a depicts in front view a basis retaining ring (95a), where the following partial technical characreristics appear:
Shrinkage handling holes (93) of the basis retaining ring (95a),
Interstice (94) of the basis retaining ring (95a).

Figure 13b depicts in cross section view the object (95a).
The objects (95b), (95c) and (95d), which are reported in other points of the text, are similar to (95a).

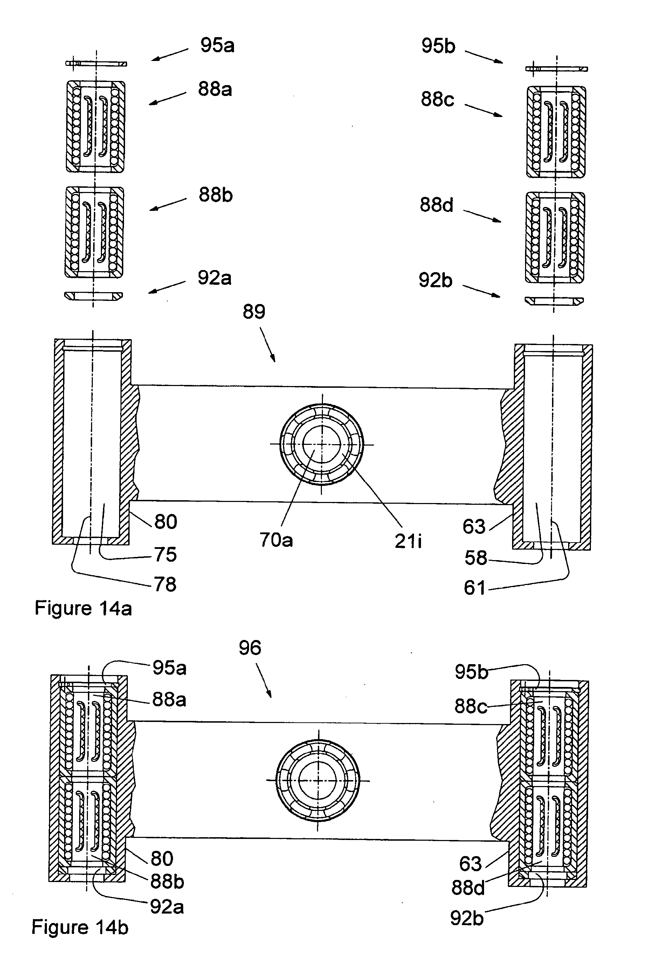

Figure 14a depicts the assembly arrangement of the objects (89), (88a), (88b), (88c), (88d), (95a), (95b), (92a) and (92b), which were reported above, which after they are assembled they will constitute the object (96) which is depicted in figure 14b.

On figure 14a appears further:
Hole (70a) of the inner ring of the rolling bearing (21i).

Figure 14b depicts in front view the object (96), turned in clockwise direction at 90 degrees on the level of drawing, which is the seating basis of the elements of the middlemost articulation of the fifth rod on the oblong mechanical driver, in its final structure.

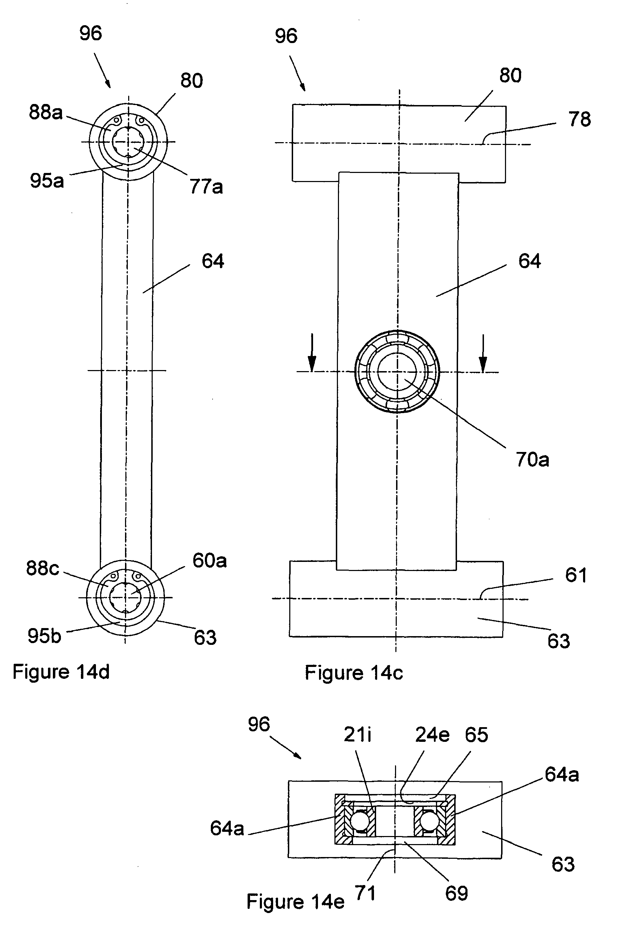

Figure 14c depicts in front view the object (96) turned at 180 degrees on the level of drawing.

Figure 14d depicts the right side view of the object (96) of the figure 14c, where further the following partial technical characteristics appear:
Hole (60a) of passing of a rod in the linear rolling bearings (88c) and (88d),
Hole (77a) of passing of a rod in the linear rolling bearings (88a) and (88b),

Figure 14e depicts the object (96) in cross section view, which was made exactly in the middle of the semifinished, for the present, middlemost articulation of the fifth rod, where appears further:
The cross section surface (64a) of the trunk (64).

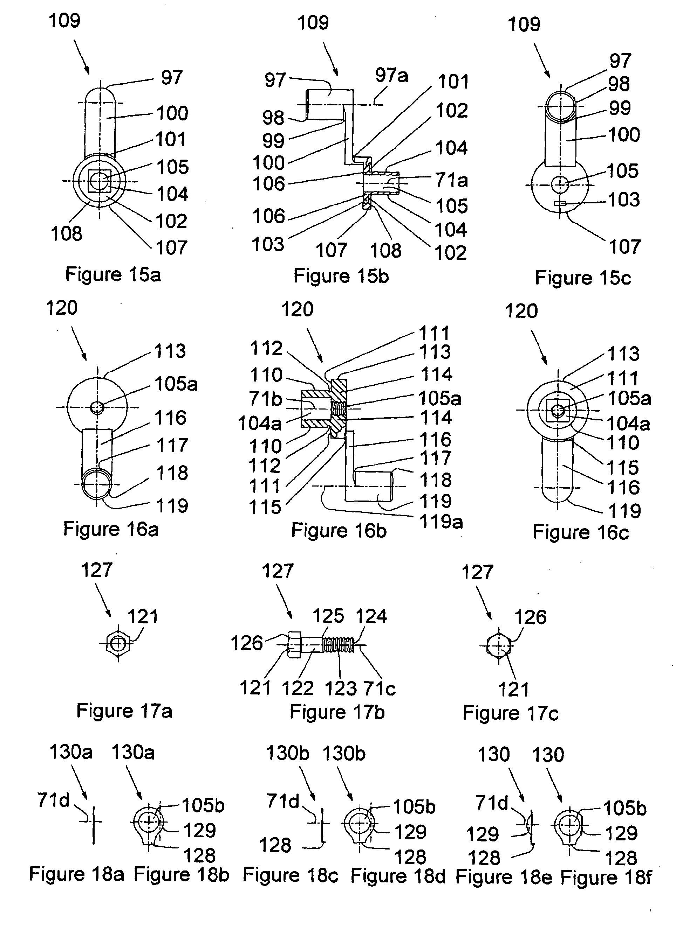

Figure 15b depicts in front view the first half (109) of the fifth rod, before its connection to other elements, where the following partial technical characreristics appear:
Imaginary rotation axis (71 a) of the hub (107) of the object (109),

Pivot (97) of the object (109),
Imaginary rotation axis (97a) of the pivot (97),
Conical configuration (98) of the end of the pivot (97),
Conical configuration (99) of the inclination change area between the pivot (97) and the arm (100) of the object (109),
Arm (100) of the object (109),
Conical configuration (101) of the inclination change area between the arm (100) and the hub (107) of the object (109),
Tolerance (102) of form of peripheral groove, for reception of the ending (110) of form of pivot, for more successful tightening of the objects (109) and (120), where: the object (110) is depicted in figures 16b and 16c, while the object (120) is depicted in figures 16a, 16b and 16c, which are reported below,
Socket (103) of entry of the claw (128) of the safety plate (130), where: the object (128) is depicted in figures 18b, 18c, 18d, 18e and 18f while the object (130) is depicted in figures 18e and 18f, which are reported below,
Square cross section ending (104) of the object (109),
Cylindrical chamber (105) of passing of the tightening screw (127), where: the object (127) is depicted in figures 17a, 17b and 17c, which are reported below,
Partial section (106) of the hub (107),
Hub (107) of the object (109),
Annular flat surface (108) of the nape of the hub (107) for axial tightening of the rolling bearing (21i),
First half (109) of the fifth rod,

Figure 15a depicts the right side view of the object (109).

Figure 15c depicts the left side view of the object (109).

Figure 16b depicts in front view the second half (120) of the fifth rod before its connection with other elements, where the following partial technical characreristics appear:
Imaginary rotation axis (71 b) of the hub (113) of the object (120),

Chamber (104a) for reception of the square cross section ending (104),
Chamber (105a) with thread for screwing of the tightening screw (127),
Pivot (110) of the object (120),
Annular flat surface (111) of the nape of the hub (113) for axial tightening of the rolling bearing (21 i),
Peripheral groove (112) on the nape of the hub (113) for successful installation of the rolling bearing (21 i),
Hub (113) of the object (120),
Partial section (114) of the hub (113),
Conical configuration (115) of the inclination change area between the arm (116) and the hub (113) of the object (120),
Arm (116) of the object (120),
Conical configuration (117) of the inclination change area between the pivot (119) and the arm (116) of the object (120),
Conical configuration (118) of the end of the pivot (119),
Pivot (119) of the object (120),
Imaginary rotation axis (119a) of the pivot (119),

Figure 16a depicts the right side view of the object (120).

Figure 16c depicts the left side view of the object (120).

Figure 17b depicts in front view the screw (127), which is used for tightening the first and the second half of the fifth rod, where the following partial technical characreristics appear:
Geometrical axis (71 c) of the screw (127),
Head (121) of the screw (127),
Trunk (122) of the screw (127),
Thread (123) of the screw (127),
Beginning (124) of the thread of the screw (127),
End (125) of the thread of the screw (127),
Conical configuration (126) of the end of the head of the screw (127), Screw (127), for tightening of the first and the second half of the fifth rod.

Figure 17a depicts the right side view of the object (127).

Figure 17c depicts the left side view of the object (127).

Figure 18b depicts in front view a safety plate (130a) with one claw, in its initial form, where the following partial technical characreristics appear:
Hole (105b) of the safety plate (130a),
Oblong claw (128) of the safety plate (130a),
Circular segment (129) of the safety plate (130a).

Figure 18a depicts in side view the object (130a), where appears further:
Geometrical axis (71d) of the safety plate (130a).

Figure 18d depicts in front view the safety plate (130b), which results from the object (130a) after bending the oblong claw (128).

Figure 18c depicts in side view the object (130b).

Figure 18f depicts in front view the safety plate (130), which results from the object (130b) after also bending the circular segment (129), which will be realized after the screwing of the tightening screw (127).

Figure 18e depicts in side view the object (130).

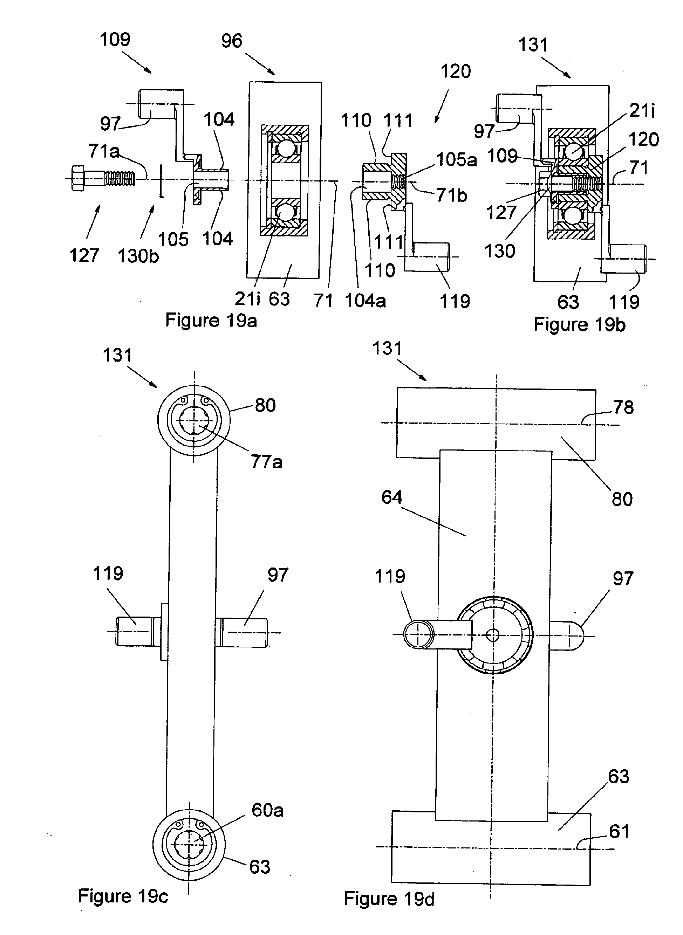

Figure 19a depicts the assembly arrangement of the objects (127), (130b), (109), (96) and (120), which were reported above, which after they are assembled they will constitute the object (131) which is depicted in figures 19b, 19c and 19d. Here the objects (71a), (71c) and (71d) coincide with the object (71 a).

Figure 19b depicts in cross section view the object (131), where the screwing of the tightening screw (127) and the bending of the circular segment (129) of the safety plate (130b) were realized, therefore, the safety plate (130b) appears in the form of (130), and with claw (120) in the socket (103). Here the objects (71 a), (71 b), (71 c) and (71 d) coincide with the object (71).

Figure 19d depicts in front view the object (131) turned at 180 degrees on the level of drawing.

Figure 19c depicts the right side view of the object (131) of the figure 19d.

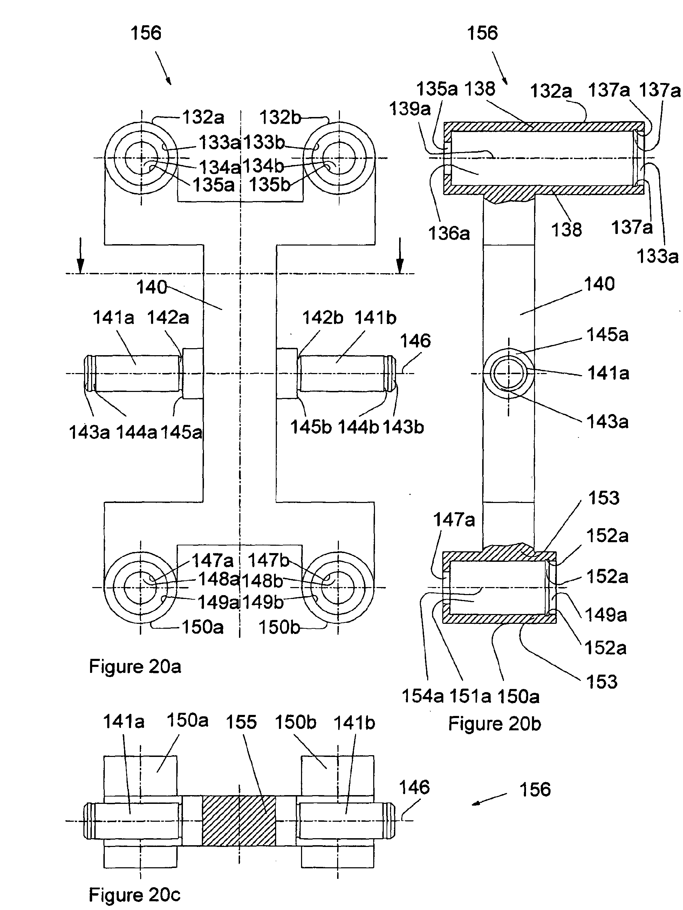

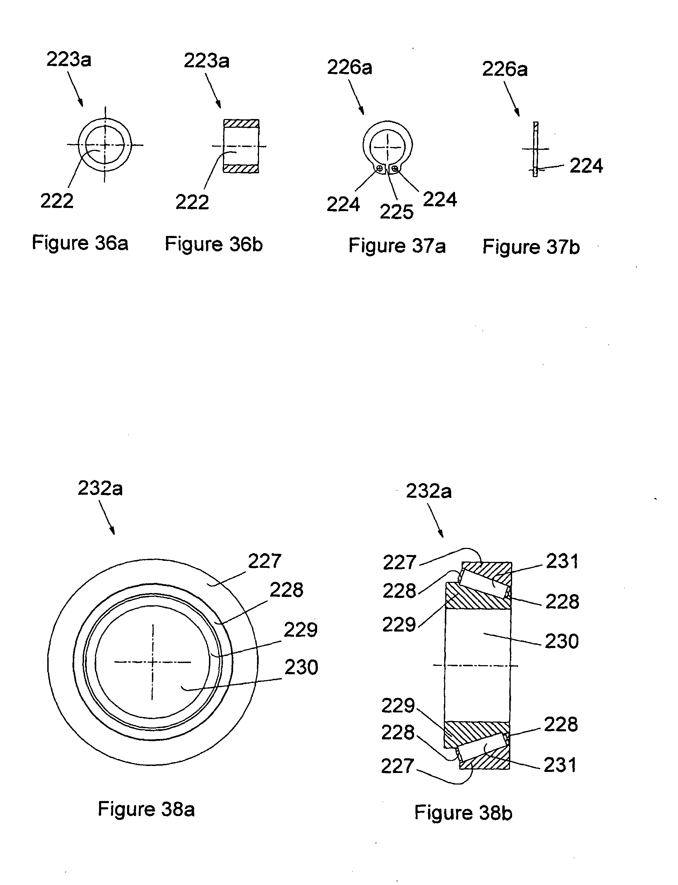

Figure 20a depicts in right side view one seating basis (156), on the oblong mechanical driver, before the installation of the linear bearings in it, which ends in form of two pivots (141a) and (141b), suitable for the articulations on the ends of the diagonal of oblong shift of the complex of mobile parts of the shape of rhomb. In this depiction, the following partial technical characreristics appear:
First seating head (132a) of the object (156),
Second seating head (132b) of the object (156),
Cylindrical orifice (133a) of entry of the linear rolling bearings (88e) and (88f), in the first seating head (132a),
Cylindrical orifice (133b) of entry of linear rolling bearings, which are similar to (88a), in the second seating head (132b),
Passing through hole (134a) of the first seating head (132a),
Passing through hole (134b) of the second seating head (132b),
Edge (135a) of the limit of the cylindrical chamber (136a) of the first seating head (132a),
Edge (135b) of the limit of the cylindrical chamber of the second seating head (132b),
Trunk (140) of the object (156),
First pivot (141a) of the object (156),
Second pivot (141 b) of the object (156),
Peripheral groove (142a) of the nape of the articulation of the pivot (141 a) for successful installation of the rolling bearings which are similar to (21a),
Peripheral groove (142b) of the nape of the articulation of the pivot (141 b) for successful installation of the rolling bearings which are similar to (21a),
Conical configuration (143a) of the end of the pivot (141a),
Conical configuration (143b) of the end of the pivot (141 b),
Peripheral groove (144a) of installation of an axis retaining ring which is similar to (226a), which is depicted in figures 37a and 37b, which is reported below,
Peripheral groove (144b) of installation of an axis retaining ring, which is similar to (226a),
Annular flat surface (145a) of the nape of the pivot (141a) for axial seating of rolling bearings,
Annular flat surface (145b) of the nape of the pivot (141b) for axial seating of rolling bearings,
Imaginary rotation axis (146) of the articulations which have pivots the (141a) and (141b),
Edge (147a) of the limit of the cylindrical chamber (151a) of the third seating head (150a),
Edge (147b) of the limit of the cylindrical chamber of the fourth seating head (150b),
Passing through hole (148a) of the third seating head (150a),
Passing through hole (148b) of the fourth seating head (150b),
Cylindrical orifice (149a) of entry of the linear rolling bearing (88g), in the third seating head (150a),
Cylindrical orifice (149b) of entry of a linear rolling bearing, which is similar to (88a), in the fourth seating head (150b),
Third seating head (150a) of the object (156),
Fourth seating head (150b) of the object (156),

Figure 20b depicts in front view the object (156), where further the following partial technical characteristics appear:
Cylindrical chamber (136a) of installation of the linear rolling bearings (88e) and (88f) of the first seating head (132a),
Peripheral groove (137a) of installation of the basis retaining ring (95c) in the first seating head (132a),
Partial section (138) of the first seating head (132a),
Imaginary geometrical axis (139a) of the cylindrical chamber (136a),
Cylindrical chamber (151a) of installation of the linear rolling bearing (88g) of the third seating head (150a),
Peripheral groove (152a) of installation of the basis retaining ring (95d) in the third seating head (150a),
Partial section (153) of the third seating head (150a),
Imaginary geometrical axis (154a) of the cylindrical chamber (151a),

Figure 20c depicts in cross section view the object (156), where appears further:
Cross section surface (155) of the trunk (140) of the object (156),

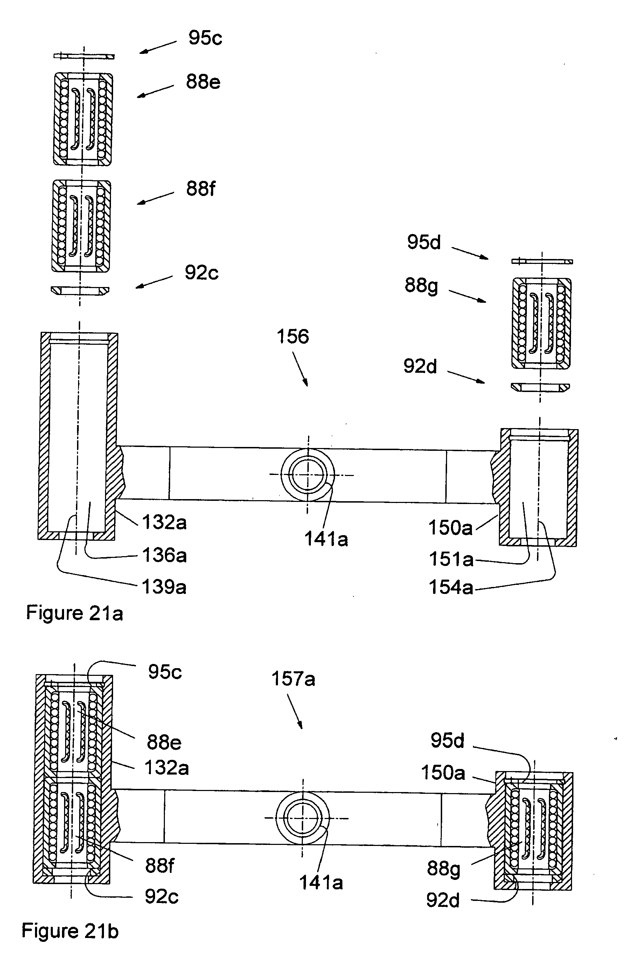

Figure 21 a depicts the assembly arrangement, on the one hand of the objects (95c), (88e), (88f), (92c) and the seating head (132a) and on the other hand of the objects (95d), (88g), (92d) and the seating head (150a), of the object (156).

Figure 21b depicts in front view the object (157a) turned in anticlockwise direction at 90 degrees on the level of the drawing, which is a seating basis of articulation, in its final structure, which results from the object (156) after the installation of the structural elements in the four seating heads (132a), (132b) (150a) and (150b).
The object (157b), which is reported in other points of the text, is similar to (157a).

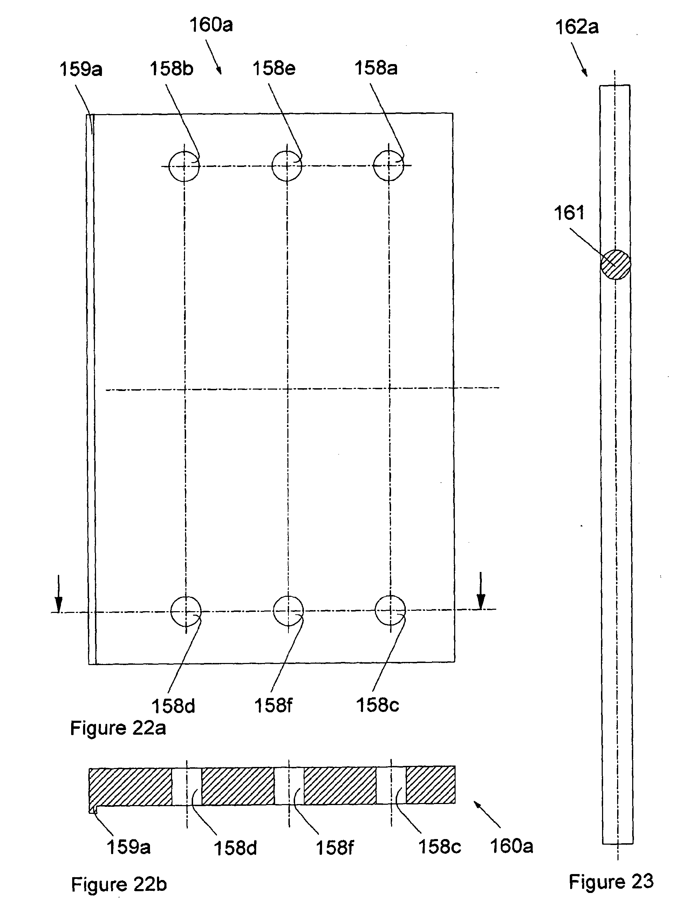

Figure 22a depicts in front view the first fastening plate (160a), of the rods which constitute the oblong mechanical driver, where the following partial technical characreristics appear:
Passing through holes (158a), (158b), (158c), (158d), (158e) and (158f), of fastening of the rods of the oblong mechanical driver,
Oblong protrusion (159a) of the plate (160a).

Figure 22b depicts in cross section view the object (160a).
The object (160b), which is reported in other points of the text, is similar to (160a).

Figure 23 depicts in front view the cylindrical rod (162a) which is one of the six, which constitute the oblong mechanical driver, where appears further:
Cross section (161) of the rod (162a).
The objects (162b), (162c), (162d), (162e) and (162f), which are reported in other points of the text, are similar to (162a).

Figure 24a depicts in front view the object (163), which resulted from the assembly of the first fastening plate (160a) of the rods of the oblong mechanical driver and of six rods, which are similar between them and they have been fastened in the object (160a). In figure 24a only the objects (160a), (162a) and (162c) appear.

Figure 24b depicts in left side view the object (163), where further the objects (162b) and (162e) appear.

Figure 24c depicts in topside view the object (163), where further the objects (162d) and (162f) appear.

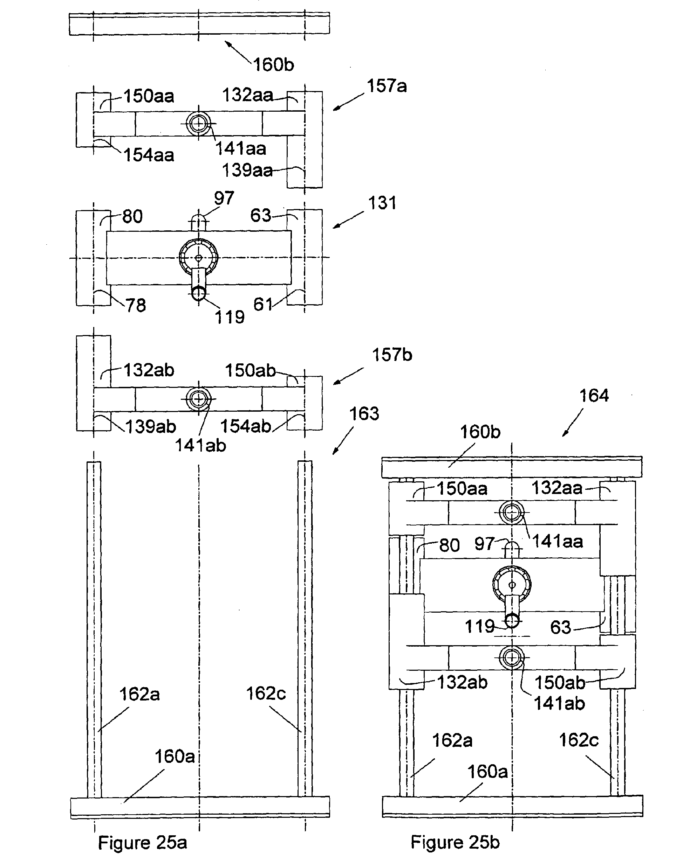

Figure 25a depicts the assembly arrangement of the objects (163), (157b), (131), (157a) and (160b) which after they are assembled they will constitute the object (164), which is depicted in figure 25b. In figure 25a further the following partial technical characteristics appear:
First seating head (132aa) of the object (157a),
First seating head (132ab) of the object (157b),
Imaginary geometrical axis (139aa) of the cylindrical chamber of the first seating head (132aa) of the object (157a),
Imaginary geometrical axis (139ab) of the cylindrical chamber of the first seating head (132ab) of the object (157b),
First pivot (141aa) of the object (157a),
First pivot (141ab) of the object (157b),
Third seating head (150aa) of the object (157a),
Third seating head (150ab) of the object (157b),
Imaginary geometrical axis (154aa) of the cylindrical chamber of the third seating head (150aa) of the object (157a),
Imaginary geometrical axis (154ab) of the cylindrical chamber of the third seating head (150ab) of the object (157b),
First seating basis (157a) of articulation,
Second seating basis (157b) of articulation,
Second fastening plate (160b) of the rods of the oblong mechanical driver.

We clarify that: The second indicator (a) is placed in the numbers of reference of technical characteristics of the object (157a) which are corresponding to those of the object (157), also the second indicator (b) is placed in the numbers of reference of technical characteristics of the object (157b) which are corresponding to those of the object (157).

Figure 25b depicts in front view the object (164) which resulted from the assembly of the objects (163), (157b), (131), (157a) and (160b).

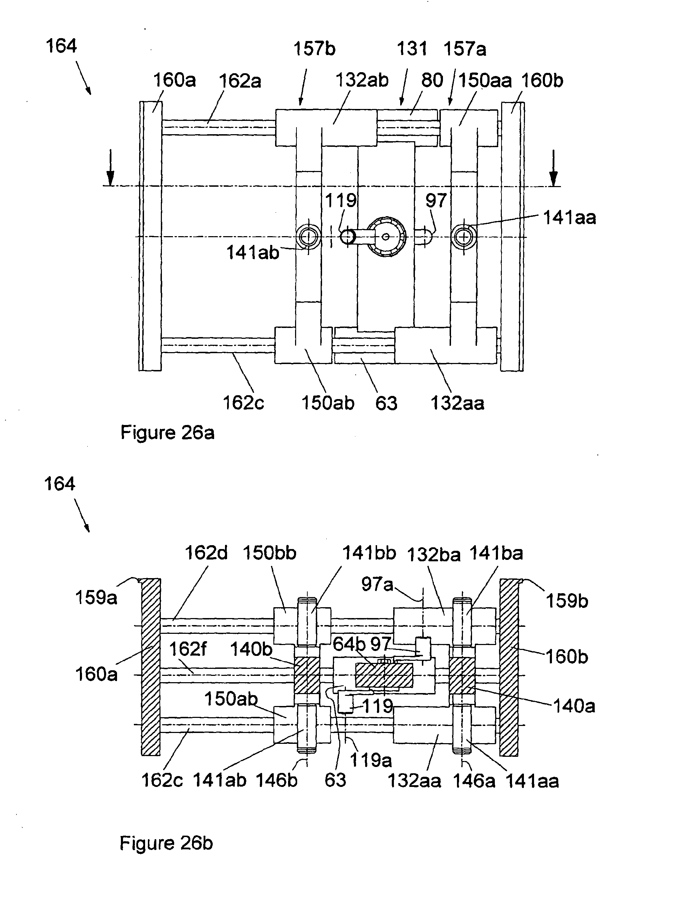

Figure 26a depicts in front view the object (164) turned in clockwise direction at 90 degrees on the level of the drawing, aiming afterwards at the depiction of the cross section view, which appears in the figure 26b.

Figure 26b depicts in cross section view the object (164), where further the following partial technical characteristics appear:
Cross section surface (64b) of the trunk (64) of the object (131),
Second seating head (132ba) of the object (157a),
Cross section surface (140a) of the trunk of the object (157a),
Cross section surface (140b) of the trunk of the object (157b),
Second pivot (141ba) of the object (157a),
Second pivot (141bb) of the object (157b),
Imaginary rotation axis (146a) of the articulations which have pivots the (141 aa) and (141ba),
Imaginary rotation axis (146b) of the articulations which have pivots the (141 ab) and (141 bb),
Fourth seating head (150bb) of the object (157b),
Oblong protrusion (159b) of the plate (160b).

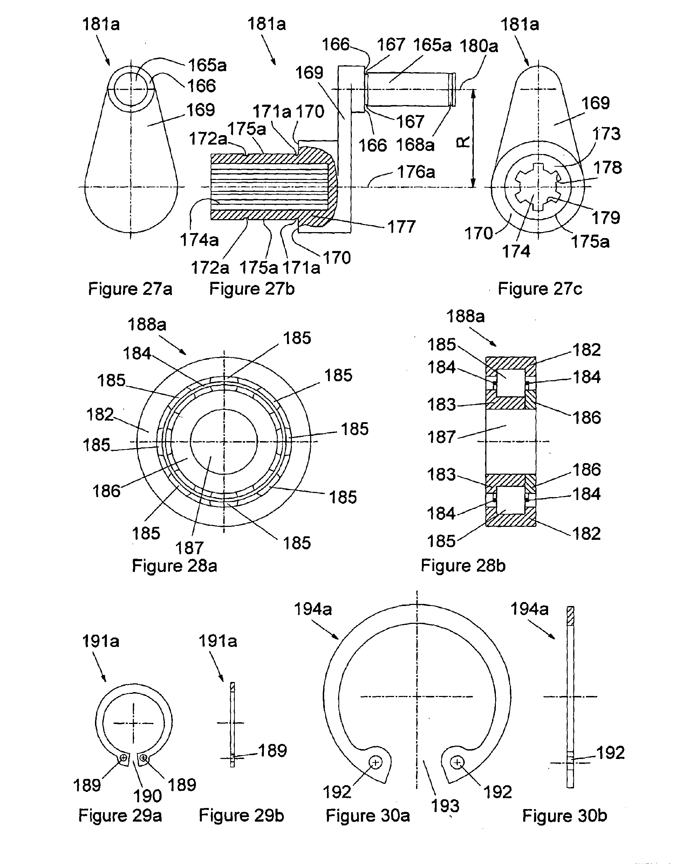

Figure 27b depicts in front view the crank (181a), where the following partial technical characreristics appear:
Pivot (165a) of articulation of rods on the crank (181a),
Annular flat surface (166) of the nape at the articulation of rods of the pivot (165a) for axial seating of the rolling bearings of the articulation,

Peripheral groove (167) for successful installation of the rolling bearings on the pivot (165a),
Peripheral groove (168a) of installation of the axis retaining ring (226a),

Arm (169) of the crank (181a),
Annular flat surface (170) of the nape of the spindle receptor (175a) of the crank (181a),
Peripheral groove (171a) for successful installation of the rolling bearing (188a), which is depicted in figures 28a and 28b, which are reported below, on the spindle receptor (175a) which moreover is a pivot,

Peripheral groove (172a) of installation of the axis retaining ring (191 a), which is depicted in figures 29a and 29b, which are reported below,
Fitting corrugation (174a), of the receptor (175a) of the crank (181a), with an external spindle,
Spindle receptor (175a), of the crank (181a), which moreover is a pivot,

Imaginary rotation axis (176a) of the spindle receptor (175a) of the crank (181a),
Partial section (177) of the spindle receptor (175a) of the crank (181a),

Imaginary rotation axis (180a) of the rods of the rhomb, which are articulated on the pivot (165a) of the crank (181a),
Radius (R) of the crank (181a).

Figure 27a depicts the right side view of the object (181a).

Figure 27c depicts the left side view of the object (181a), where further the following partial technical characteristics appear:
Edge (173) of the limit of the spindle receptor (175a) of the crank (181a),

Hole (174) for the reception of a spindle of the spindle receptor (175a) of the crank (181a),
Groove (178) of the spindle receptor (175a) of the crank (181a),
Wedge (179) of the spindle receptor (175a) of the crank (181a),
The object (181 b), which is reported in other points of the text, is similar to (181a).

Figure 28a depicts in front view the cylindrical annular rolling bearing (188a) with supporting ring, where the following partial technical characreristics appear:
Outer ring (182) of the rolling bearing (188a),
Cage (184) of the rolling bearing (188a),
Cylindrical rolling elements (185) of the rolling bearing (188a),
Supporting ring (186) of the rolling bearing (188a),
Hole (187) of the inner ring of the rolling bearing (188a).

Figure 28b depicts in cross section view the object (188a) where appears further:
Inner ring (183) of the rolling bearing (188a),
The object (188b), which is reported in other points of the text, is similar to (188a).

Figure 29a depicts in front view the axis retaining ring (191 a), where the following partial technical characreristics appear:
Expansion handling holes (189) of the axis retaining ring (191 a),
Interstice (190) of the axis retaining ring (191a).

Figure 29b depicts in cross section view the object (191 a).
The object (191 b), which is reported in other points of the text, is similar to (191a).

Figure 30a depicts in front view the basis retaining ring (194a), where the following partial technical characreristics appear:
Shrinkage handling holes (192) of the basis retaining ring (194a),

Interstice (193) of the basis retaining ring (194a).

Figure 30b depicts in cross section view the object (194a).
The object (194b), which is reported in other points of the text, is similar to (194a).

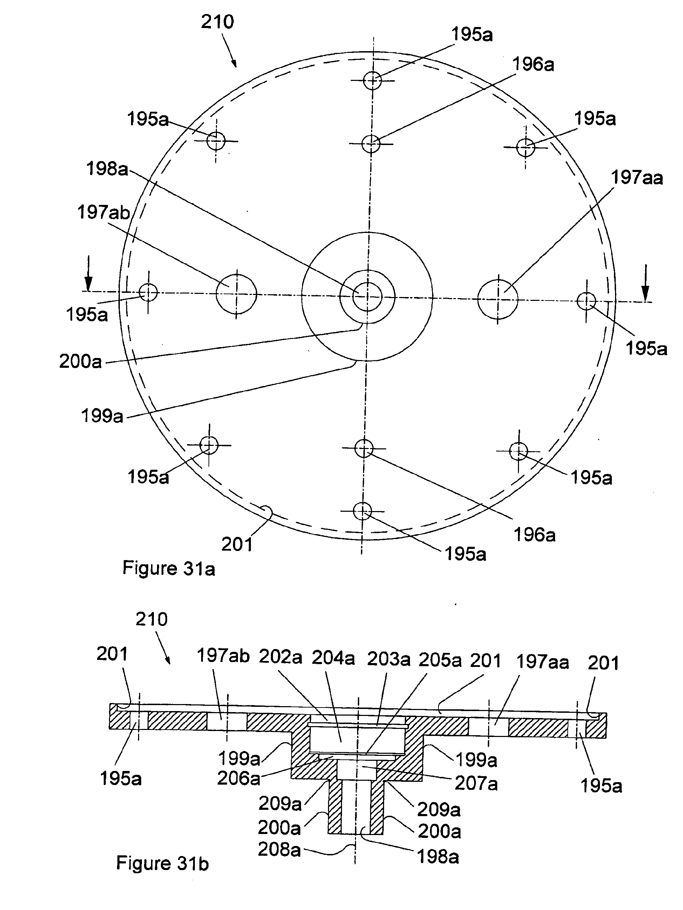

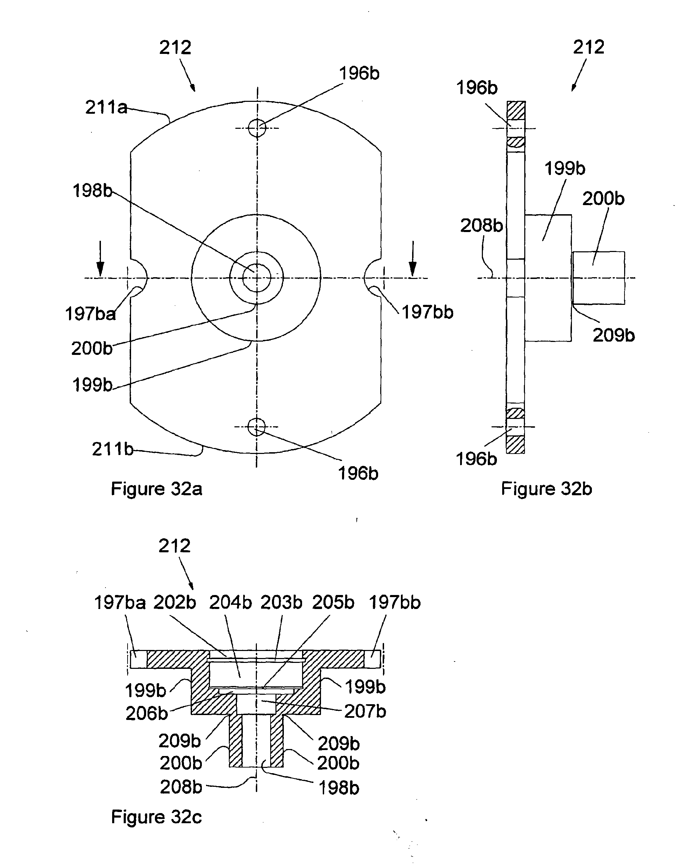

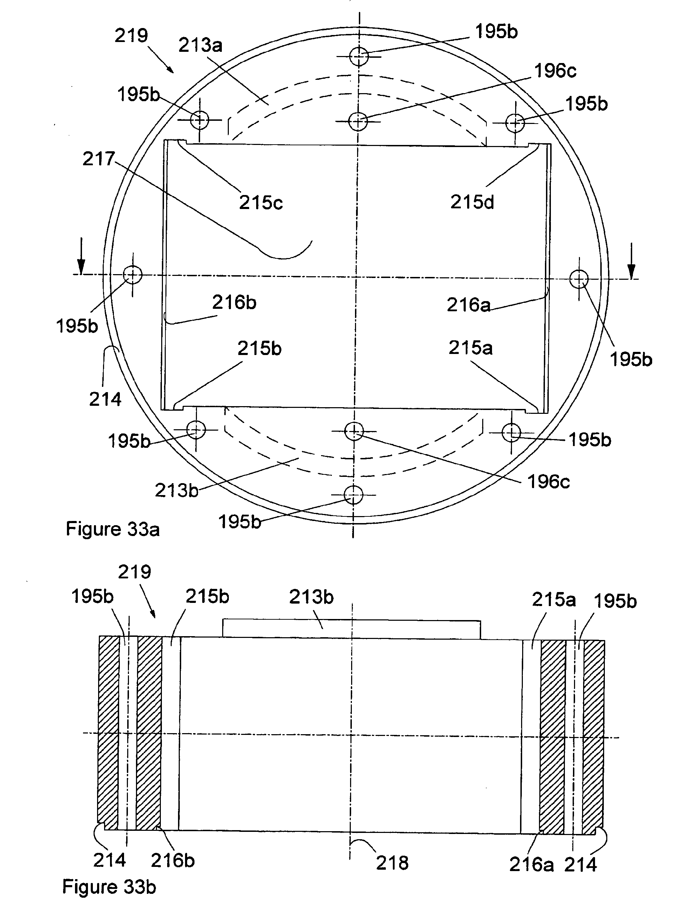

Figure 31a depicts in front view the first lid (210) of the shell, where the following partial technical characreristics appear:
Eight passing through holes with the common number (195a), whose geometrical axes are parallel to the imaginary rotation axis (208a) of the hub (199a) and they occur on an imaginary surface of cylinder in equal angular distances the one of the other and they are destined for tightening screws of the first lid (210) with the external pulley and with the core (219) of the shell which is depicted in figures 33a and 33b, which are reported below,
Two passing through holes with the common number (196a), whose geometrical axes are parallel to the imaginary rotation axis (208a) of the hub (199a) and they occur in symmetrical locations with respect to it and they are destined for tightening screws of the first lid (210) with the core (219) of the shell and with the second lid (212) which is depicted in figures 32a, 32b and 32c, which are reported below,

First passing through hole (197aa) of the first lid (210) for facilitation of the assembly,
Second passing through hole (197ab) of the first lid (210) for facilitation of the assembly,
Central passing through hole (198a) of the first lid (210) for passing of an external spindle,
Hub (199a) of the first lid (210),
Ending of form of pivot (200a) of the hub (199a) of the first lid (210),

Peripheral edge (201) for successful fitting of the first lid (210) with the peripheral notch (214) of the core of the shell (219),

Figure 31b depicts in cross section view the object (210), where further the following partial technical characteristics appear:
Cylindrical orifice (202a) of entry of the rolling bearing (188a),
Peripheral groove (203a) of installation of the basis retaining ring (194a),
Cylindrical chamber (204a) of installation of the rolling bearing (188a),
Peripheral groove (205a) for successful installation of the rolling bearing (188a),
First gradation (206a) of the cylindrical chamber of the hub (199a) for ensuring of interstice between the hub and the rotating parts,
Second gradation (207a) of the cylindrical chamber of the hub (199a) for ensuring of interstice between the hub and the rotating parts,

Imaginary rotation axis (208a) of the hub (199a),
Peripheral groove (209a) for successful installation, in the first lid (210), of the external seating bearing (232a), which is depicted in figures 38a and 38b.

Figure 32a depicts in front view the second lid (212) of the shell, where the following partial technical characreristics appear:
Two passing through holes with the common number (196b), whose geometrical axes are parallel to the imaginary rotation axis (208b) of the hub (199b) and they occur in symmetrical locations with respect to it and they are destined for tightening screws of the first lid (210) with the core (219) of the shell and with the second lid (212), which are corresponding to the (196a),
First semicircular notch (197ba) of the second lid (212) for facilitation of the assembly,
Second semicircular notch (197bb) of the second lid (212) for facilitation of the assembly,
Central passing through hole (198b) of the second lid (212) for passing of an external spindle,
Hub (199b) of the second lid (212),
Ending in form of pivot (200b) of the hub (199b) of the second lid (212),

First circular arc configuration (211a) of the second lid (212) for centering, at the assembly, with the core (219) of the shell,
Second circular arc configuration (211 b) of the second lid (212) for centering, at the assembly, with the core (219) of the shell.

Figure 32b depicts in left side view the object (212) where further the following partial technical characteristics appear:
Imaginary rotation axis (208b) of the hub (199b),
Peripheral groove (209b) for successful installation, in the second lid (212), of the external seating bearing (232b), which is similar to (232a).

Figure 32c depicts in cross section view the object (212) where further the following partial technical characteristics appear:
Cylindrical orifice (202b) of entry of the rolling bearing (188b),
Peripheral groove (203b) of installation of the basis retaining ring (194b),

Cylindrical chamber (204b) of installation of the rolling bearing (188b),

Peripheral groove (205b) for successful installation of the rolling bearing (188b),
First gradation (206b) of the cylindrical chamber of the hub (199b) for ensuring of interstice between the hub and the rotating parts,
Second gradation (207b) of the cylindrical chamber of the hub (199b) for ensuring of interstice between the hub and the rotating parts.

Figure 33a depicts in front view the core (219) of the shell, where the following partial technical characreristics appear:
Eight passing through holes with the common number (195b), whose geometrical axes are parallel to imaginary rotation axis (218) and they occur on an imaginary surface of cylinder in equal angular distances the one of the other and they are destined for tightening screws of the first lid (210) with the core (219) of the shell and with the external pulley, which are corresponding to the (195a),
Two passing through holes with the common number (196c), whose geometrical axes are parallel to the imaginary rotation axis (218) and they occur in symmetrical locations with respect to it, for tightening screws of the first lid (210) with the core (219) of the shell and with the second lid (212), which are corresponding to the (196a) and (196b)
First arc-shaped driver (213a) of the core (219) of the shell for centering of the second lid (212),
Second arc-shaped driver (213b) of the core (219) of the shell for centering of the second lid (212),
Peripheral notch (214) of the core (219) of the shell for successful fitting with the peripheral edge (201) of the first lid (210),
First seating corrugation (215a) of the fastening plate (160a),
First seating corrugation (215b) of the fastening plate (160b),
Second seating corrugation (215c) of the fastening plate (160b),
Second seating corrugation (215d) of the fastening plate (160a),
Oblong notch (216a) for fitting with the oblong protrusion (159a) of the plate (160a),
Oblong notch (216b) for fitting with the oblong protrusion (159b) of the plate (160b),
Space (217) of installation of the internal parts in the core (219) of the shell.

Figure 33b depicts in cross section view the object (219) where appears further:
Imaginary rotation axis (218) of the core (219) of the shell.

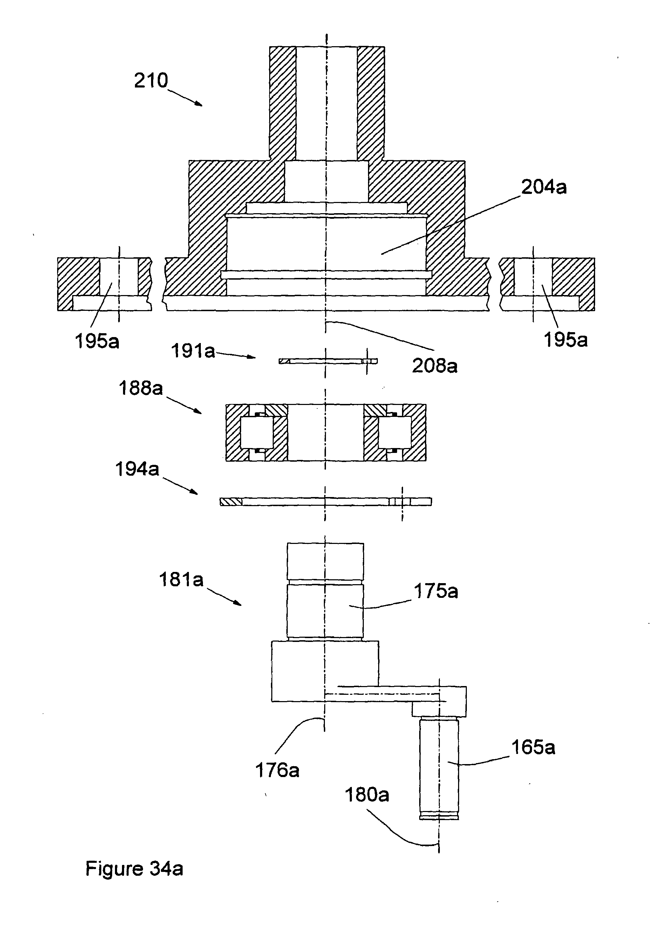

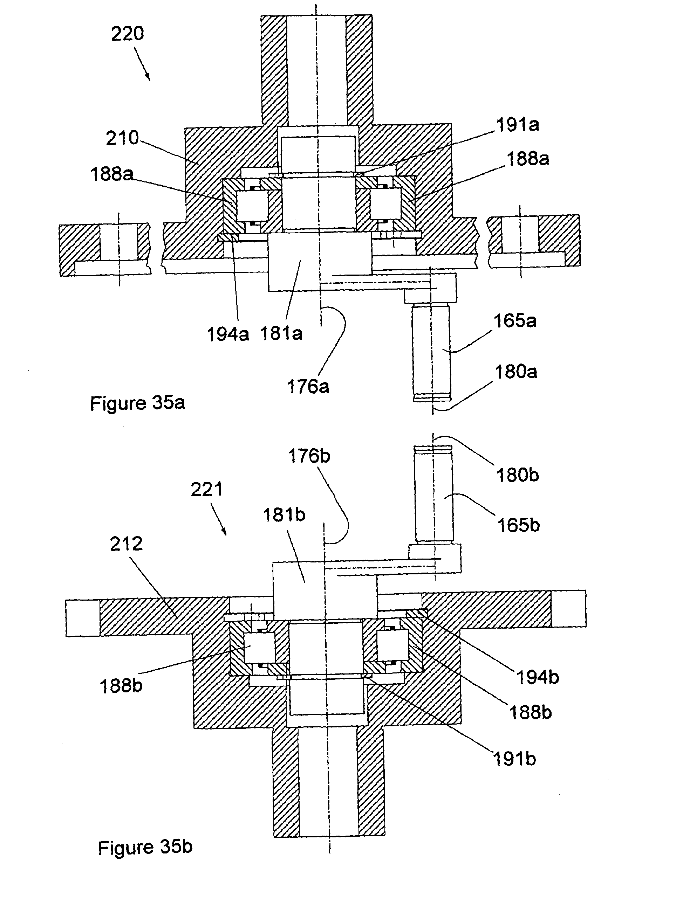

Figure 34a depicts the assembly arrangement of the objects (210), (191a), (188a), (194a) and (181a) which after they are assembled they will constitute the object (220), which is depicted in figure 35a.

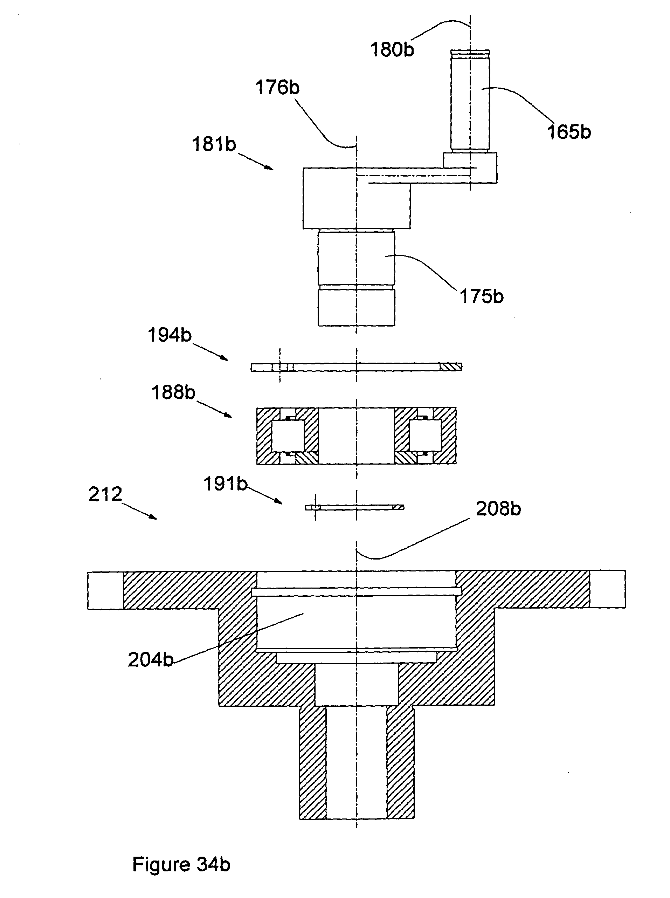

Figure 34b depicts the assembly arrangement of the objects (212), (191b), (188b), (194b) and (181b) which after they are assembled they will constitute the object (221), which is depicted in figure 35b. In figure 34b the following objects and partial technical characteristics appear:
Pivot (165b) of articulation of rods on the crank (181 b),
Spindle receptor (175b) of the crank (181 b), which moreover is a pivot,

Imaginary rotation axis (176b) of the spindle receptor (175b) of the crank (181b),
Imaginary rotation axis (180b) of the rods of the rhomb which are articulated on the pivot (165b) of the crank (181b),
Second crank (181 b),
Rolling bearing (188b),
Axis retaining ring (191 b),
Basis retaining ring (194b).

Figure 35a depicts in cross section view the object (220), which resulted from the first lid (210) of the shell, after the installation of the crank (181a), inside the hub (199a). Henceforth, the imaginary rotation axis (208a) coincides with the (176a).

Figure 35b depicts in cross section view the object (221), which resulted from the second lid (212) of the shell, after the installation of the crank (181b), inside the hub (199b). Henceforth, the imaginary rotation axis (208b) coincides with the (176b).

Figure 36a depicts in front view the rods distance ring (223a), which is placed in order to retain the distance between the rolling bearings, where the following partial technical characteristic appears:
Hole (222) of the ring (223a).

Figure 36b depicts in cross section view the object (223a).
The object (223b), which is reported in other points of the text, is similar to (223a).

Figure 37a depicts in front view the axis retaining ring (226a), where the following partial technical characreristics appear:
Expansion handling holes (224) of the axis retaining ring (226a),
Interstice (225) of the axis retaining ring (226a).

Figure 37b depicts in cross section view the object (226a).
The objects (226b), (226c), (226d), (226e) and (226f) which are reported in other points of the text, are similar to (226a).

Figure 38a depicts in front view the object (232a), which is annular conical oblique roller bearing, where the following partial technical characreristics appear:
Outer ring (227) of the rolling bearing (232a),
Cage (228) of the rolling bearing (232a),
Inner ring (229) of the rolling bearing (232a),
Hole (230) of the inner ring of the rolling bearing (232a).

Figure 38b depicts in cross section view the object (232a), where appear further:
Conical rolling elements (231) of the rolling bearing (232a),
The object (232b), which is reported in other points of the text, is similar to (232a).

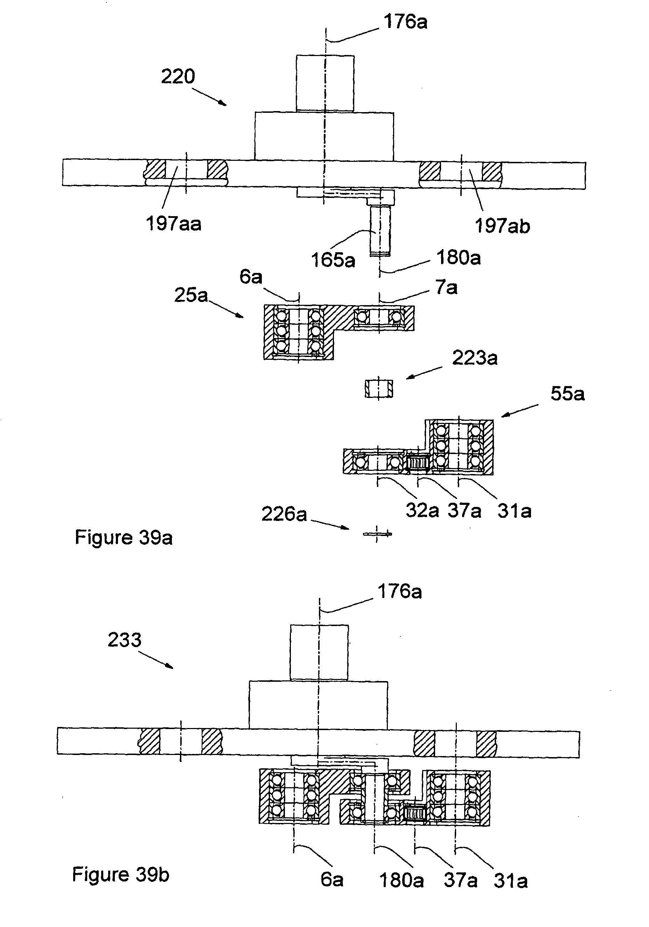

Figure 39a depicts the assembly arrangement of the objects (220), (25a), (223a), (55a) and (226a), which after they are assembled they will constitute the object (233), which is depicted in figure 39b.

Figure 39b depicts the object (233), which resulted after the realization of the articulation of the rods (25a) and (55a) on the pivot (165a) of the crank (181a). In figure 39b the imaginary rotation axes (7a) and (32a) coincide with the (180a).

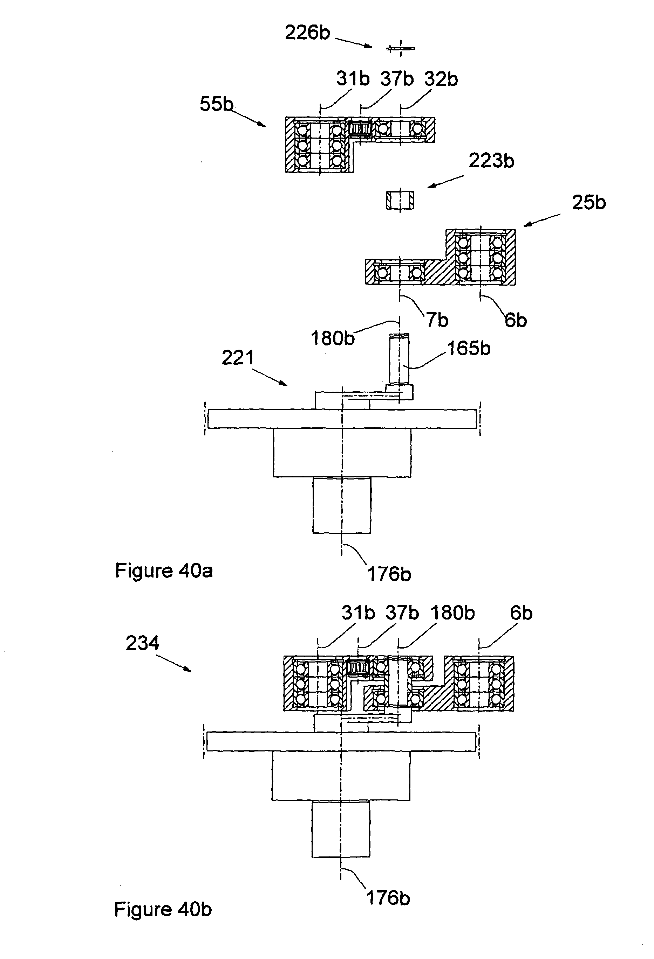

Figure 40a depicts the assembly arrangement of the objects (221), (25b), (223b), (55b) and (226b), which after they are assembled they will constitute the object (234), which is depicted in figure 40b.

In figure 40a, besides the others, the following objects and partial technical characteristics appear:
Imaginary rotation axis (6b) of the first articulation of the rod (25b),
Imaginary rotation axis (7b) of the second articulation of the rod (25b),
Second rod (25b) of rhomb with two articulations in its final structure, Imaginary rotation axis (31 b) of the first articulation of the rod (55b),
Imaginary rotation axis (32b) of the second articulation of the rod (55b),

Imaginary rotation axis (37b) of the middlemost articulation of the rod (55b),
Second rod (55b) of rhomb with three articulations in its final structure, Rods distance ring (223b),
Axis retaining ring (226b).

Figure 40b depicts the object (234) which resulted after the realization of the articulation of the rods (25b) and (55b) on the pivot (165b) of the crank (181b). In figure 40b the rotation imaginary axes (7b) and (32b) coincide with the (180b).

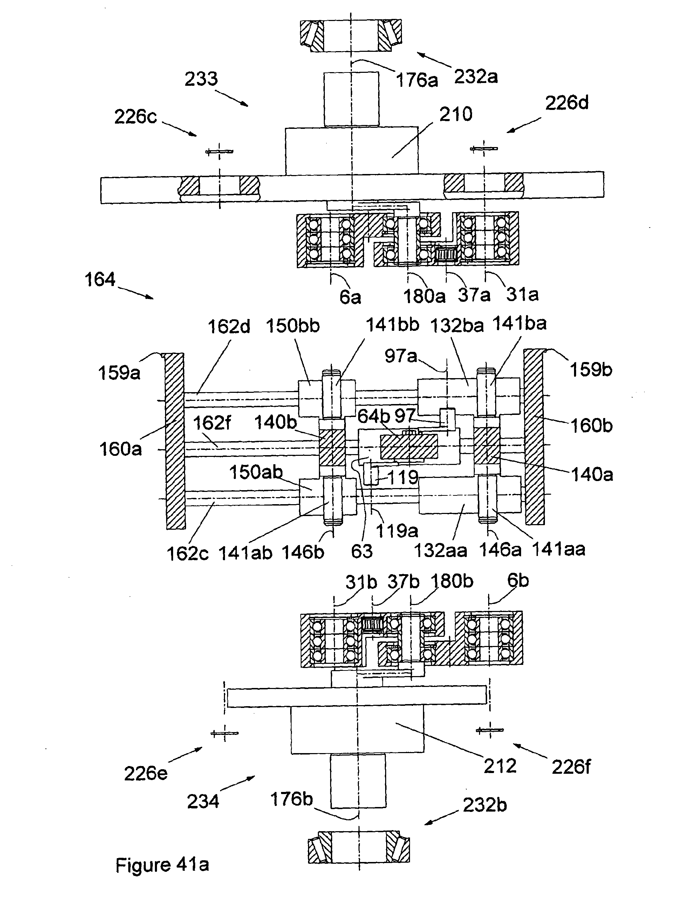

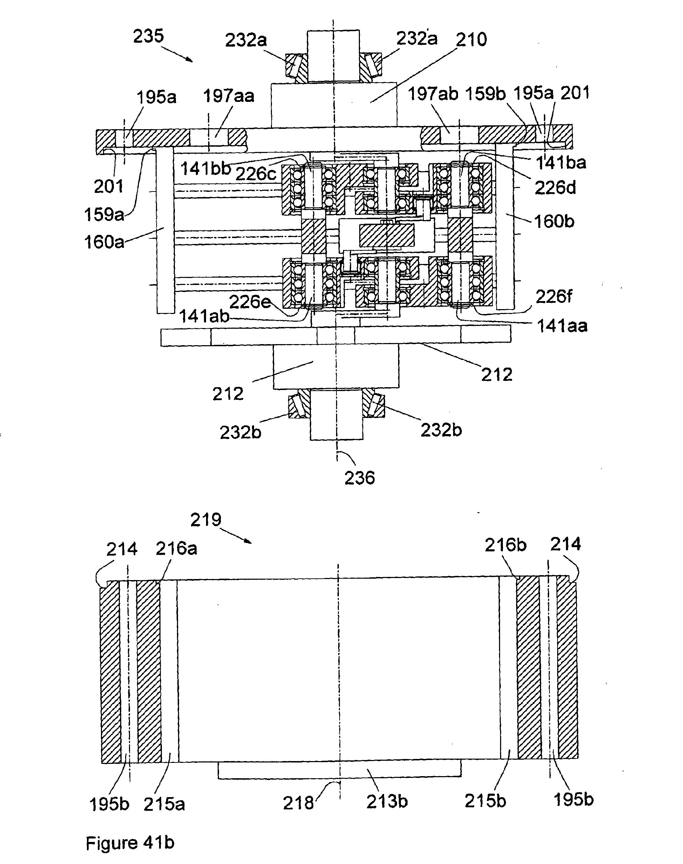

Figure 41 a depicts the assembly arrangement of the objects (232a), (233), (226c), (226d), (164), (234), (226e), (226f) and (232b) which after they are assembled they will constitute the object (235), which is depicted in figure 41 b. In figure 41a, besides the others, the following objects appear:
Axis retaining rings (226c), (226d), (226e) and (226f),
Annular conical oblique roller bearing (232b).

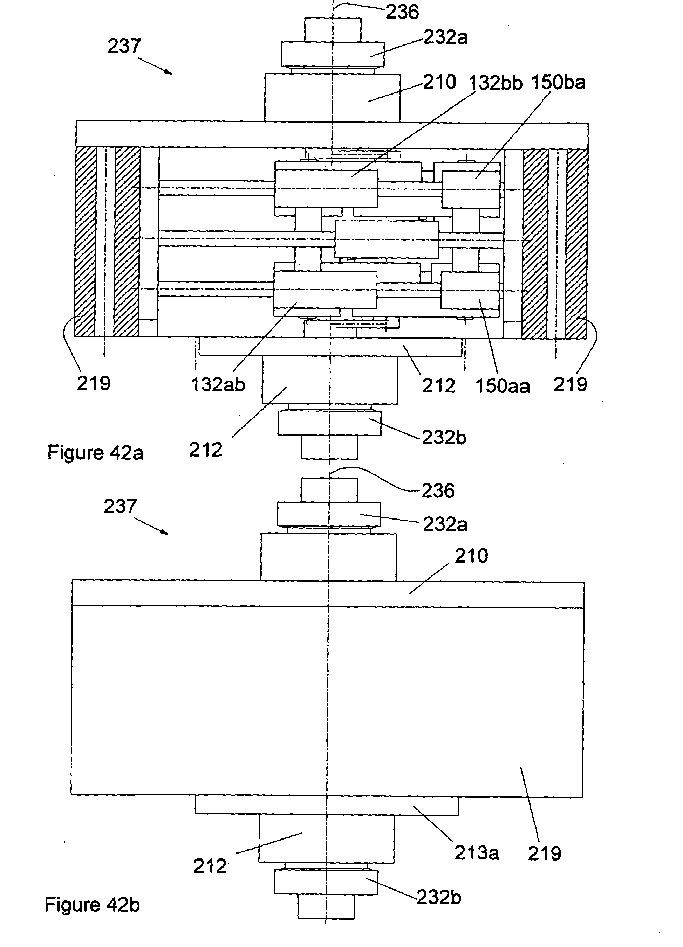

Figure 41b depicts the assembly arrangement, on the one hand, of the object (235) and, on the other hand, of the core (219) of the shell of the figure 33b but turned at 180 degrees on the level of the drawing, which after they are assembled they will constitute the object (237), which is depicted in figures 42a and 42b. In figure 41b the second lid (212) of the shell is depicted turned around the central imaginary rotation axis (236) at 90 degrees, in relation to its final orientation, in order to be able to pass through the space (217) of the core (219) of the shell. In figure 41b appears, besides the others:

### Central imaginary rotation axis (236).

Figure 42a depicts the differential of automatic alterations of folding rhomb (237), without the external pulley and its tightening screws with the first lid (210) and with the core (219) of the shell, without the tightening screws of the first lid (210) with the second lid (212) and with the core (219) of the shell, with the central imaginary rotation axis (236) in vertical direction, with a cross section view of the core (219) of the shell and with each one of its already used constitutive elements, in its final location in relation to the rest. In figure 42a, besides the others, the following partial technical characteristics appear:
Second seating head (132bb) of the object (157b),
Fourth seating head (150ba) of the object (157a).

Figure 42b depicts the external view of the object (237) of the figure 42a.

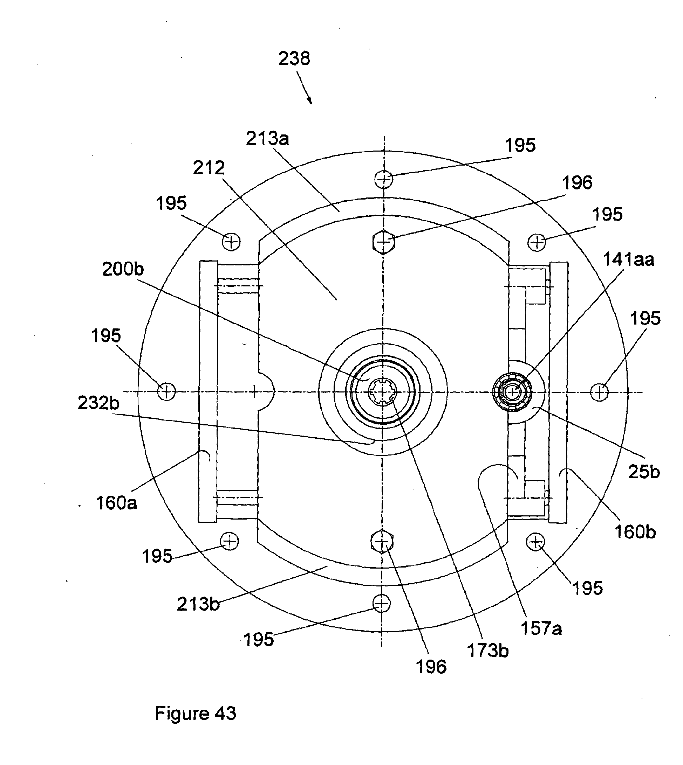

Figure 43 depicts the front view of the differential of automatic alterations of folding rhomb (238), which resulted from the object (237), after the placement and tightening of the two screws (196) in the two passing through holes (196a) of the first lid (210), in the two passing through holes (196b) of the second lid (212) and in the two passing through holes (196c) of the core (219) of the shell, where, besides the others, the following partial technical characteristics appear:
Edge (173b) of the limit of the spindle receptor (175b) of the crank (181b),
Eight passing through holes with the common number (195), whose geometrical axes are parallel to the central imaginary rotation axis (236) and they occur on an imaginary surface of cylinder, in equal angular distances, the one of the other, and they are destined for tightening screws of the first lid (210) with the core (219) of the shell and with the external pulley, which are corresponding to the (195a) and (195b),
They also appear:
Two tightening screws with the common number (196) which penetrate the holes (196a), (196b) and (196c) and they tighten together the first lid (210) with the core (219) of the shell and with the second lid (212).

We clarify that: In figure 43, the eight passing through holes with the common number (195a) of the first lid (210) and the corresponding to them, eight holes with the common number (195b) of the core (219) of the shell, appear with the common number (195). Every hole (196a) of the first lid (210) is coaxial with one (196b) of the second lid (212) and also with one (196c) of the core (219) of the shell and is penetrated by a corresponding screw (196).

The example, which follows, is one of the many manners of realization of the invention. In this, the external pulley of the shell is since its construction a separate, unified and solid constitutive element of the shell. The manner of realization of the example is developed below in detail, gradually, using the depictions of the accompanying drawings. That is to say:

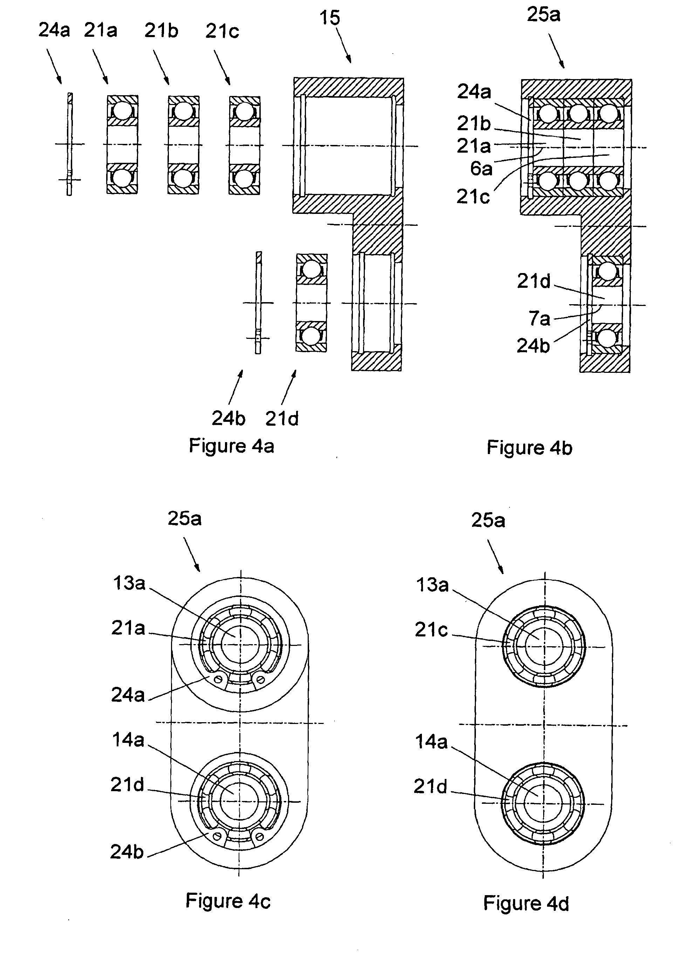

We assemble the objects (15), (21a), (21b), (21 c), (21d), (24a) and (24b) and we constitute the first rod of rhomb with two articulations (25a) in its final structure, according to the depictions of the figures 4a, 4b, 4c and 4d.

We assemble the objects (46), (21e), (21f), (21g), (21 h), (24c), (24d), (51a) and (54a) and we constitute the first rod of rhomb with three articulations (55a) in its final structure, according to the depictions of the figures 8a, 8b, 8c and 8d.

We assemble the objects (81), (21 i) and (24e) and we constitute the seating basis (89) of the middlemost articulation of the fifth rod, with the rolling bearing of the middlemost articulation of the fifth rod installed and without the installation of the linear bearings in it, according to the depictions of the figures 11 a and 11 b.

We assemble the objects (89), (88a), (88b), (88c), (88d), (92a), (92b), (95a) and (95b) and we constitute the seating basis (96) of the middlemost articulation of the fifth rod, in its final structure, according to the depictions of the figures 14a, 14b, 14c, 14d and 14e.

We assemble the objects (127), (130b), (109), (96) and (120) and we constitute the object (131), according to the depictions of the figures 19a, 19b, 19c, and 19d. After the assembly, the safety plate (130b) appears in its final form as object (130). The objects (127), (130), (109) and (120) constitute the fifth rod.

The object (131) is a unified cluster in its final structure and it includes the seating basis (96) of the middlemost articulation of the fifth rod and the fifth rod assembled and installed in this basis.

We constitute, in its final structure, the seating basis (157a), which is depicted in figure 21b, as follows:
We install the objects (95c), (88e), (88f) and (92c) in the seating head (132a) and the objects (95d), (88g) and (92d) in the seating head (150a) of the object (156), according to the assembly arrangement of the figure 21a. Also we install objects similar to (95c), (88e), (88f) and (92c) in the seating head (132b) and objects similar to (95d), (88g) and (92d) in the seating head (150b) of the object (156). All the above objects, assembled, will constitute the object (157a) which is depicted in figure 21 b.

On the seating basis (157a), the one articulation of the diagonal of oblong shift of the complex of mobile parts of the shape of rhomb will be realized.

We assemble the first fastening plate (160a) of the rods of the oblong mechanical driver, and six rods (162a), (162b), (162c), (162d), (162e) and (162f) and we constitute the object (163) which, for plenitude sake of the presentation, it is depicted in three views, in figures 24a, 24b and 24c.

We assemble the objects (163), (157b), (131), (157a), and (160b) and we constitute the object (164), according to the depictions of the figures 25a, 25b, 26a and 26b. At this assembly:
the rod (162a) penetrates the seating head (132ab) of the object (157b) and the seating head (150aa) of the object (157a),

the rod (162c) penetrates the seating head (150ab) of the object (157b) and the seating head (132aa) of the object (157a),
the rod (162e) penetrates the seating head (80) of the object (131),

the rod (162f) penetrates the seating head (63) of the object (131),
the rod (162b) penetrates the seating head (132bb) of the object (157b) and the seating head (150ba) of the object (157a),
the rod (162d) penetrates the seating head (150bb) of the object (157b) and the seating head (132ba) of the object (157a).

We assemble the objects (210), (191a), (188a), (194a) and (181a), according to the depictions of the figure 34a and we constitute the object (220) which is depicted in figure 35a. At this assembly, at first we pass slackly the object (194a) around the object (175a) which is a part of the object (181a) and eftsoon we seat the object (188a) around the object (175a) and we secure it by the object (191a). Then we seat the object (188a) in the cylindrical chamber (204a) of the object (210) and we secure it by the object (194a).

We assemble the objects (212), (191b), (188b), (194b) and (181b), according to the depictions of the figure 34b and we constitute the object (221) which is depicted in figure 35b. At this assembly, at first we pass slackly the object (194b) around the object (175b) which is a part of the object (181b) and eftsoon we seat the object (188b) around the object (175b) and we secure it by the object (191b). Then we seat the object (188b) in the cylindrical chamber (204b) of the object (212) and we secure it by the object (194b).

We assemble the objects (220), (25a), (223a), (55a) and (226a) and we constitute the object (223), according to the depictions of the figures 39a and 39b.

We assemble the objects (221), (25b), (223b), (55b) and (226b) and we constitute the object (234), according to the depictions of the figures 40a and 40b.

We assemble the objects (232a), (233), (226c), (226d), (164), (234), (226e), (226f) and (232b), according to the depictions of the figure 41 a and we constitute the object (235) which is depicted in figure 41b. The annular conical oblique roller bearings (232a) and (232b) are presented only as recommendation for external seating of the invention.

For the needs of assembly of the objects of the figure 41 a:
The imaginary rotation axes (6b), (31a) and (146a) and also the geometrical axes of the objects (226d) and (226f) occur on the same straight line.
The imaginary rotation axes (6a), (31 b) and (146b) occur on the same straight line.
The imaginary rotation axes (37b) and (119a) occur on the same straight line.
The imaginary rotation axes (37a) and (97a) occur on the same straight line.
The imaginary rotation axes (176a) and (176b) occur on the same straight line and in the figure 41b they coincide with the central imaginary rotation axis (236).
All these axes are parallel between them and coplanar.

At first stage, all the objects are assembled, apart from the (226c) and (226e).

At second stage, keeping the objects (164), (233) and (234) stationary, we turn the one crank, let it be the (181a), at 180 degrees to one direction; then the other crank, in this case the (181b), will be turned at the opposite direction at 180 degrees and the imaginary rotation axis (146b) will be placed on the same imaginary straight line with the geometrical axes of the objects (226c) and (226e) and then we place the objects (226c) and (226e) in the predestined locations.

We assemble the objects (235) and (219), according to the depictions of the figure 41b in order to constitute the object (237) which is depicted in figures 42a and 42b.

For the needs of this assembly, the imaginary rotation axis (218) coincides definitively with the central imaginary rotation axis (236).

After the passing of the second lid (212) of the shell through the space (217) of the core (219) of the shell, we turn it at 90 degrees around the central imaginary rotation axis (236) and thus we reinstate it in its final orientation, as it appears in figures 42a and 42b.

After the previous assemblies, we insert the two screws with the common number (196), in the two passing through holes (196a) of the first lid (210), in the two passing through holes (196b) of the second lid (212) and in the two passing through holes (196c) of the core (219) of the shell, for the tightening of the first lid (210) with the core (219) of the shell and with the second lid (212), we realize the tightening and through this manner we constitute the differential of automatic alterations of folding rhomb (238) which is depicted in figure 43, without the external pulley.

Afterwards, we select a toothed pulley, that is known on the previous level of technique with the name of sun and with the name of crown, which must have eight passing through holes whose geometrical axes must coincide one per one with them of the eight holes (195) of the object (238) of the figure 43, must have same diameters with the holes (195) and the imaginary rotation axis of the toothed pulley must coincide with the central imaginary rotation axis (236). We insert, in the eight passing through holes (195) and in the corresponding eight holes of the toothed pulley, the corresponding eight screws and we realize the tightening of the toothed pulley with the object (238) of the figure 43.

The differential of automatic alterations of folding rhomb, which we described in the present example, can be used in a usual family passenger car.

## Claims

1. The differential of automatic alterations of folding rhomb is a cluster of interconnected elements which execute coordinated relative motions between them; it consists, on the one hand, of a shell (210, 219, 212) which is a combination of other elements which are fitted and tightened sufficiently between them by screws or other means, in order to constitute unified solid body, which externally ends in form of toothed pinion or toothed chain wheel or pulley and, on the other hand, of a number of internal parts inside the shell (210, 219, 212) of which others are immovable and others are mobile parts in relation to it; it is based, on either side, on two external immovable bearings (232a, 232b) which allows to it only a rotary motion in both rotation directions around an imaginary rotation axis which from now on will be called central imaginary rotation axis (236); it is interlinked with the external surroundings, on the one hand, via the external toothed pinion or toothed chain wheel or pulley of the shell (210, 219, 212), which meshes mechanically with an external source of mechanical power and, on the other hand, via two of its internal parts that end in form of spindle receptors (175a, 175b), which are based inside the shell (210, 219, 212) with their sockets turned outside in opposite directions the one of the other, in bearings that allow them only rotary motions in relation to the shell (210, 219, 212), around the central imaginary rotation axis (236), in both rotation directions. Each of the spindle receptors (175a, 175b) meshes mechanically with corresponding external spindle in order to be able to rotate at the same speed as this, but without possibility of relative motion between this and the, corresponding to it, external spindle; during its operation, it is applied on this, by the external source of mechanical power via the external toothed pinion or toothed chain wheel or pulley of the shell (210, 219, 212), a torque because of which it is set in rotary motion, receiving through this manner mechanical power. Then, it applies mechanical actions in form of torques, via the spindle receptors (175a, 175b), on both external spindles, setting them in rotary motions around the central imaginary rotation axis (236) and thus giving them the received mechanical power, always however with division of power to them so that their kinematical requirements are satisfied, which are offered as mechanical reactions to the mechanical actions which the spindle receptors (175a, 175b) apply on them.
The basic parts of the shell are the core (219) inside which the internal parts occur, two lids (210, 212) on either side of the core which end in form of hubs (199a, 199b) inside which the spindle receptors (175a, 175b) are based, and the external toothed pinion or toothed chain wheel or pulley; between the internal parts is included a fastened and immovable, in relation to the shell, an oblong mechanical driver on which meshed mobile parts can be based and its specification is that allows them only a rectilinear reciprocating shift, on an imaginary straight line which from now on will be called imaginary straight line of oblong shift which is stationary in relation to the oblong mechanical driver and intersects transversely the central imaginary rotation axis (236). The level which the central imaginary rotation axis (236) and the imaginary straight line of oblong shift define, from now on will be called imaginary level of oblong shift, **characterized by** the fact that:
A complex of mobile parts is also included, which is mobile in relation to the shell, that includes first, second, third and fourth rod (25a, 55a, 25b, 55b) of the same length (L1), which are articulated sequentially between them as closed serie, by permanent articulations which allow rotations between the articulated rods on them, around their corresponding first, second, third and fourth imaginary rotation axes (146a, 180a, 146b, 180b), which are parallel to the central imaginary rotation axis (236), shaping thus a closed chain of four rods by four articulations, which has the shape of a rhomb that from now on will be called complex of mobile parts of the shape of rhomb.
An additional fifth rod is also included, of the same length (L1) with every one of the first, second, third and fourth, the one end of which is articulated exactly in the middle of the second rod (55a), and the other one exactly in the middle of the fourth rod (55b) which is parallel to the second rod by permanent articulations which allow rotations between the articulated rods on them, around their corresponding imaginary rotation axes (97a, 119a), which are parallel to the central imaginary rotation axis (236), with the result that the complex of mobile parts of the shape of rhomb is able to undergo alterations and at the process of these alterations, the fifth rod to obligate the complex of mobile parts of the shape of rhomb to keep the shape of rhomb or in the extreme case, of its complete retraction, the six imaginary rotation axes (146a, 146b, 180a, 180b, 97a, 119a), of all of its parts, to occur on the imaginary level of oblong shift, never however to have an other shape.
Two similar cranks (181a, 181b), are also included each of which is constituted of an arm, on the ends of which, there exist endings of pivots whose imaginary rotation axes have distance between them equal to the radius of the crank, the length (R) of which is smaller than the length (L1) of each of the first, second, third and fourth rods (25a, 55a, 25b, 55b) of the complex of mobile parts of the shape of rhomb, and they are parallel to the central imaginary rotation axis (236). The pivot (175a) of the one first crank (181a) and the corresponding pivot (175b) of the other second crank (181b), besides the form and use of them as pivots, they are simultaneously the two spindle receptors (175a, 175b) and specification of each of them is to receive a torque, via the arm of the crank to which it belongs, and to transport it to the corresponding to this external spindle. The pivot (165a) of the first crank (181a) and the corresponding pivot (165b) of the second crank (181b) are the rotation axes of the two articulations of the complex of mobile parts of the shape of rhomb, which are selected in order to occur on the two ends of the one diagonal of the complex of mobile parts of the shape of rhomb which from now on will be called diagonal of cranks.
A first seating basis (157a) with built-in the pivots (141aa, 141ba) which have common the first imaginary rotation axis (146a), and a second seating basis (157b) with built-in the pivots (141ab, 141bb) which have common the third imaginary rotation axis (146b) are also included. Around the pivots of the first seating basis (157a) the one of the two articulations is realized, which occur on the ends of the other diagonal of the complex of mobile parts of the shape of rhomb which from now on will be called diagonal of oblong shift, and around the pivots of the second seating basis (157b) the other articulation of this diagonal is realized. The seating bases (157a, 157b) are based as meshed mobile parts on the oblong mechanical driver, they always keep the corresponding to them the first and third imaginary rotation axes (146a, 146b) on the imaginary level of oblong shift and they are confined in the motions which the specification of the oblong mechanical driver defines whose available length is bigger than the double sum of the length of the radius (R) of one of the cranks (181a, 181b) and of the length (L1) of one of the first, second, third, fourth rods (25a, 55a, 25b, 55b) of the complex of mobile parts of the shape of rhomb.
During the operation, the final result is that: the mechanical power which the external toothed pinion or toothed chain wheel or pulley of the shell receives from the external source of mechanical power, is transported from there sequentially via the oblong mechanical driver, via the seating bases (157a, 157b) of the articulations of the diagonal of oblong shift, via the rods of the complex of mobile parts of the shape of rhomb, via the pivots (165a, 165b) of the articulations of the diagonal of the cranks and via the arms of the cranks, to the spindle receptors (175a, 175b) which divide and distribute it to the external spindles, setting them in rotation, with a rotation speeds ratio of them which always satisfies their kinematical requirements and the differential ensures continuous and automatic readjustment of the momentary relative positions and speeds between the shell and the internal parts.

2. Differential of automatic alterations of folding rhomb, according to the claim 1, is **characterized by** the fact that: for avoidance of distortions of the internal parts of the shell, the fifth rod is articulated in articulation that occurs exactly in its middle, with a third seating basis (96) which is based as meshed mobile part on the oblong mechanical driver being confined in the motions which the specification of the oblong mechanical driver defines and simultaneously the configuration of the third seating basis (96) allows the relative rotation between the fifth rod and the oblong mechanical driver around the corresponding imaginary rotation axis (71) of this articulation, which is parallel to the central imaginary rotation axis (236) and it always occurs on the imaginary level of oblong shift.

3. Differential of automatic alterations of folding rhomb, according to the claims 1 and 2, is **characterized by** the fact that: the external toothed pinion or toothed chain wheel or pulley of the shell, since its construction, is peripheral continuous ending of the one of the lids (210), with which it constitutes a unified and solid constitutive element of the shell.

4. Differential of automatic alterations of folding rhomb, according to the claims 1 and 2, is **characterized by** the fact that: the external toothed pinion or toothed chain wheel or pulley of the shell, since its construction, is a separate, unified and solid constitutive element of the shell.

5. Differential of automatic alterations of folding rhomb, according to the claims 1, 2, 3 and 4, is **characterized by** the fact that: all the articulations in which the first, second, third, fourth rods (25a, 55a, 25b, 55b) of the complex of mobile parts of the shape of rhomb and the fifth rod as well as the two seatings of the spindle receptors (175a, 175b) and also the articulation between the third seating basis (96) and the fifth rod, participate are realized by the use of actinic annular rolling bearings or actinic slipping bearings in order to exclude the direct contact between the mobile parts which realize relative rotary motions between them and the frictions are thus minimized.

6. Differential of automatic alterations of folding rhomb, according to the claims 1, 2, 3, 4 and 5, is **characterized by** the fact that: all the seatings of the first, second and third seating bases (157a, 157b, 96), on the oblong mechanical driver, with the intention of executing the motions which the specification of the oblong mechanical driver defines, they are realized by the use of the linear rolling bearings, in order to exclude the direct contact between the mobile parts which realize relative oblong motions between them and the frictions are thus minimized.

7. Differential of automatic alterations of folding rhomb, according to the claims 1, 2, 3, 4, 5 and 6, is **characterized by** the fact that: the external toothed pinion or toothed chain wheel or pulley of the shell, is toothed, known on the previous level of technique with the name of sun and with the name of crown and its mesh with the external source of mechanical power becomes via also a toothed external toothed pinion or toothed chain wheel or pulley, known on the previous level of technique with the name of pinion, which belongs to the external source of mechanical power.

8. Differential of automatic alterations of folding rhomb, according to the claims 1, 2, 3, 4, 5 and 6, is **characterized by** the fact that: the external toothed pinion or toothed chain wheel or pulley of the shell, has form of a toothed chain wheel and its mesh with the external source of mechanical power becomes via a closed chain.

9. Differential of automatic alterations of folding rhomb, according to the claims 1, 2, 3, 4, 5 and 6, is **characterized by** the fact that: the external toothed pinion or toothed chain wheel or pulley of the shell, has form of drum and its mesh with the external source of mechanical power becomes via endless belts.

## Patentansprüche

1. Differential automatischer Alterationen einer Faltraute ist eine Gruppe von miteinander verbundenen Elementen, die koordinierte relative Bewegungen zwischen sich ausführen; es besteht einerseits aus einem Gehäuse (210, 219, 212), das eine Kombination von anderen Elementen ist, die montiert und mit Schrauben oder anderen Mitteln ausreichend miteinander festgezogen sind, um einen einheitlichen festen Körper zu bilden, der extern in ein Zahnritzel oder ein Zahnkettenrad oder eine Riemenscheibe endet, und andererseits aus einer Reihe von internen Teilen im inneren Bereich des Gehäuses (210, 219, 212), von denen einige im Verhältnis zu dem Gehäuse nicht bewegliche und andere bewegliche Teile sind; es lagert beiderseits auf zwei externen unbeweglichen Lagern (232a, 232b), die ihm nur eine Drehbewegung in beide Drehrichtungen um eine imaginäre Drehachse erlauben, die von nun an zentrale imaginäre Drehachse (236) genannt wird; Es ist mit der äußeren Umgebung auf der einen Seite durch das externe Zahnritzel oder das Zahnkettenrad oder die Riemenscheibe des Gehäuses (210, 219, 212) verbunden, die mechanisch mit einer externen Quelle mechanischer Leistung verbunden ist, und auf der anderen Seite durch zwei seiner inneren Teile, die am Ende die Form von Spindelsockeln haben (175a, 175b), die in dem Gehäuse (210, 219, 212) mit ihren Sockeln nach außen gekehrt in voneinander entgegengesetzten Richtungen lagern, auf Lagern, die ihnen nur Drehbewegungen im Verhältnis zu dem Gehäuse (210, 219, 212) um die zentrale imaginäre Drehachse (236) in beide Drehrichtungen erlauben. Jeder der Spindelsockeln (175a, 175b) ist mechanisch mit entsprechender externer Spindel verbunden, damit er in der Lage ist, sich mit der gleichen Geschwindigkeit wie diese zu drehen, aber ohne die Möglichkeit der relativen Bewegung zwischen diesem und der ihm entsprechenden externen Spindel; Während seines Betriebes wird von der externen Quelle mechanischer Leistung über das externe Zahnritzel oder das Zahnkettenrad oder die Riemenscheibe des Gehäuses (210, 219, 212) ein Drehmoment darauf ausgeübt, wegen dessen es sich in Drehbewegung setzt und somit mechanische Leistung erhält. Dann werden auf die zwei externen Spindeln über die Spindelsockeln (175a, 175b) mechanische Aktionen in Form von Drehmomenten ausgeübt, indem es sie in rotierende Bewegungen um die zentrale imaginäre Drehachse (236) setzt, und überträgt so die erhaltene mechanische Leistung an die Spindelsockeln, jedoch immer mit der Verteilung der Leistung an sie, so dass ihre kinematischen Anforderungen, die sich als mechanische Reaktionen auf die mechanischen Aktionen äußern, die die Spindelsockeln (175a, 175b) darauf ausüben, erfüllt werden.
Die wichtigsten Teile des Gehäuses sind der Kern (219), in dem sich die inneren Teile befinden, die zwei Deckel (210, 212) beiderseits des Kerns, die in Naben (199a, 199b) enden, in denen die Spindelsockeln (175a, 175b) lagern, sowie das externe Zahnritzel oder das Zahnkettenrad oder die Riemenscheibe; in den inneren Teilen ist der im Verhältnis zu dem Gehäuse fixierte und unbewegliche längliche mechanische Antrieb enthalten, auf dem miteinander verbundene bewegliche Teile lagern können. Seine Spezifikation ist, diesen nur eine geradlinige schwingende Verschiebung auf der imaginären geraden Linie zu erlauben, die von nun an imaginäre gerade Linie von länglicher Verschiebung genannt wird, die im Verhältnis zu dem länglichen mechanischen Antrieb unbeweglich ist und die zentrale imaginäre Drehachse senkrecht schneidet (236). Die Ebene, die die zentrale imaginäre Drehachse (236) und die imaginäre gerade Linie von länglicher Verschiebung bestimmen, wird von nun an imaginäre Ebene der länglichen Verschiebung genannt, und wird durch die Tatsache gekennzeichnet, dass:
Ein Komplex von beweglichen Teilen ist ebenfalls enthalten, der im Verhältnis zu dem Gehäuse beweglich ist, das einen ersten, zweiten, dritten und vierten Stab (25a, 55a, 25b, 55b) der gleichen Länge (L1) enthält, die sich nacheinander gelenkartig in geschlossener Reihe mit permanenten gelenkartigen Verbindungen verbinden, die Rotationen der mit ihnen verbundenen Stäbe untereinander um ihre entsprechende erste, zweite, dritte und vierte imaginäre Drehachse (146a, 180a, 146b, 180b) erlauben, die parallel zu der zentralen imaginären Drehachse (236) sind, und bilden somit durch vier gelenkartige Verbindungen eine geschlossene Kette von vier Stäben, die rautenförmig ist, und von nun an rautenförmiger Komplex beweglicher Teile genannt wird.
Enthalten wird ebenfalls ein zusätzlicher fünfter Stab von gleicher Länge (L1) mit dem ersten, zweiten, dritten und vierten, dessen ein Ende genau in der Mitte des zweiten Stabes (55a) und das andere genau in der Mitte des vierten Stabes (55b), der parallel zum zweiten Stab (55a) ist, durch permanente gelenkartige Verbindungen verbunden ist, die Rotationen der mit ihnen verbundenen Stäbe untereinander um ihre entsprechenden imaginären Drehachsen (97a, 119a) erlauben, die parallel zu der zentralen imaginären Drehachse (236) sind, mit dem Ergebnis, dass der rautenförmige Komplex beweglicher Teile in der Lage ist Umwandlungen durchzumachen, und während des Vorgangs dieser Umwandlungen soll der fünfte Stab den rautenförmigen Komplex beweglicher Teile verpflichten seine rautenförmige Form zu erhalten oder im Extremfall seiner vollständigen Retraktion sollen sich die sechs imaginären Drehachsen (146a, 146b, 180a, 180b, 97a, 119a) aller seiner Teile auf der imaginären Ebene der länglichen Verschiebung befinden, aber niemals eine andere Form annehmen.
Zwei ähnliche Kurbeln (181 a, 181b) sind ebenfalls enthalten, und jede von ihnen besteht aus einem Arm, an dessen Enden sich Drehzapfen-Enden befinden, deren imaginäre Drehachsen einen Abstand zwischen sich haben, der dem Radius der Kurbeln entspricht, dessen Länge (R) kleiner ist als die Länge (L1) der einzelnen Stäbe, also des ersten, zweiten, dritten und vierten, (25a, 55a, 25b, 55b) des rautenförmigen Komplexes der beweglichen Teile und parallel zur zentralen imaginären Drehachse (236) sind. Der Drehzapfen (175a) der einen, ersten, Kurbel (181 a) und der entsprechende Drehzapfen (175b) der anderen, zweiten, Kurbel (181b) sind neben ihrer Form und Verwendung als Drehzapfen gleichzeitig auch die beiden Spindelsockeln (175a, 175b), und die Spezifikation jedes einzelnen davon ist, über den Arm der Kurbel, der er angehört, ein Drehmoment zu erhalten und dieses an die entsprechende externe Spindel zu übertragen. Der Drehzapfen (165a) der ersten Kurbel (181a) und der entsprechende Drehzapfen (165b) der zweiten Kurbel (181 b) sind die Drehachsen der beiden gelenkartigen Verbindungen des rautenförmigen Komplexes beweglicher Teile, die ausgewählt werden, um sich an den beiden Enden der einen Diagonale des rautenförmigen Komplexes beweglicher Teile zu befinden, die von nun an Diagonale der Kurbeln genannt wird.
Enthalten sind auch eine erste Lagerbasis (157a) mit eingebauten Drehzapfen (141aa, 141ba), die die erste imaginäre Drehachse (146a) gemeinsam haben, und eine zweite Lagerbasis (157b) mit eingebauten Drehzapfen (141ab, 141bb), die die dritte imaginäre Drehachse (146b) gemeinsam haben. Rund um die Drehzapfen der ersten Lagerbasis (157a) entsteht eine der zwei gelenkartigen Verbindungen, die sich an den Enden der anderen Diagonale des rautenförmigen Komplexes beweglicher Teile befinden, die von nun an Diagonale von länglicher Verschiebung genannt wird, und um die Drehzapfen der zweiten Lagerbasis (157b) entsteht die andere gelenkartige Verbindung dieser Diagonale. Die Lagerbasen (157a, 157b) lagern als miteinander verbundene bewegliche Teile auf dem länglichen mechanischen Antrieb, erhalten immer ihre entsprechenden imaginären Drehachsen (146a, 146b), also die erste und die dritte, auf der imaginären Ebene der länglichen Verschiebung und beschränken sich auf die Bewegungen, die von der Spezifikation des länglichen mechanischen Antriebs bestimmt werden, dessen verfügbare Länge größer ist als die doppelte Summe der Länge des Radius (R) einer der Kurbeln (181 a, 181b) und der Länge (L1) eines der Stäbe (25a, 55a, 25b, 55b), also des ersten, zweiten, dritten und vierten, des rautenförmigen Komplexes der beweglichen Teile.
Während des Betriebes ist das Schlussergebnis dass, die mechanische Leistung, die das externe Zahnritzel oder das Zahnkettenrad oder die Riemenscheibe des Gehäuses von der externen Quelle mechanischer Leistung erhält, von dort aus sequenziell durch den länglichen mechanischen Antrieb, durch die Lagerbasen (157a, 157b) der gelenkartigen Verbindungen der Diagonale der länglichen Verschiebung, durch die Stäbe des rautenförmigen Komplexes beweglicher Teile, durch die Drehzapfen (165a, 165b) der gelenkartigen Verbindungen der Diagonale der Kurbeln und durch die Arme der Kurbeln zu den Spindelsockeln (175a, 175b) befördert wird, die sie aufteilen und an die externen Spindeln verteilen, indem sie mit ihrem Drehzahlgeschwindigkeitsverhältnis in Rotation gesetzt werden, das ihre kinetischen Anforderungen stets erfüllt, und das Differential gewährleistet die kontinuierliche und automatische Anpassung der momentanen relativen Positionen und Geschwindigkeiten zwischen dem Gehäuse und den inneren Teilen.

2. Differential automatischer Alterationen einer Faltraute wird nach dem Patentanspruch 1 durch die Tatsache gekennzeichnet, dass: zur Vermeidung von Verzerrungen der inneren Teile des Gehäuses der fünfte Stab an einer gelenkartigen Verbindung, die sich genau in dessen Mitte befindet, mit einer dritten Lagerbasis (96) verbunden ist, die als verbundener beweglicher Teil auf dem länglichen mechanischen Antrieb lagert, in ihren Bewegungen beschränkt, wie die Spezifikation des länglichen mechanischen Antriebs bestimmt, und gleichzeitig erlaubt die Konfiguration der dritten Lagerbasis (96) die relative Rotation zwischen dem fünften Stab und dem länglichen mechanischen Antrieb um die entsprechende imaginäre Drehachse (71) dieser gelenkartigen Verbindung, die parallel zu der zentralen imaginären Drehachse (236) ist, und sich stets auf der imaginären Ebene der länglichen Verschiebung befindet.

3. Differential automatischer Alterationen einer Faltraute wird nach den Patentansprüchen 1 und 2 durch die Tatsache gekennzeichnet, dass: das externe Zahnritzel oder das Zahnkettenrad oder die Riemenscheibe des Gehäuses seit seiner Herstellung peripheres kontinuierliches Ende des einen Deckels (210) ist, mit dem es ein einheitliches und festes konstitutives Element des Gehäuses bildet.

4. Differential automatischer Alterationen einer Faltraute wird nach den Patentansprüchen 1 und 2 durch die Tatsache gekennzeichnet, dass: das externe Zahnritzel oder das Zahnkettenrad oder die Riemenscheibe des Gehäuses seit seiner Herstellung besonderes, einheitliches und festes konstitutives Element des Gehäuses ist.

5. Differential automatischer Alterationen einer Faltraute wird nach den Patentansprüchen 1, 2, 3 und 4, durch die Tatsache gekennzeichnet, dass: alle gelenkartigen Verbindungen, bei denen der erste, zweite, dritte und vierte Stab (25a, 55a, 25b, 55b) des rautenförmigen Komplexes beweglicher Teile und der fünfte Stab, sowie die beiden Lagerungen der Spindelsockeln (175a, 175b) und auch die gelenkartige Verbindung zwischen der dritten Lagerbasis (96) und des fünften Stabes beteiligt sind, durch den Einsatz aktinischer ringförmiger Wälzlager oder aktinischer Abrutschlager entstehen, damit der direkte Kontakt zwischen den beweglichen Teilen, die relative Drehbewegungen untereinander ausführen, ausgeschlossen wird und so ihre Reibungen minimiert werden.

6. Differential automatischer Alterationen einer Faltraute wird nach den Patentansprüchen 1, 2, 3, 4 und 5 durch die Tatsache gekennzeichnet, dass: alle Lager der ersten, zweiten und dritten Lagerbasis (157a, 157b, 96) auf dem länglichen mechanischen Antrieb zur Ausführung der Bewegungen, wie die Spezifikation des länglichen mechanischen Antriebs bestimmt, durch den Einsatz von Linear-Wälzlagern entstehen, um den direkten Kontakt zwischen den beweglichen Teilen, die relative längliche Bewegungen untereinander ausführen, ausgeschlossen wird und so ihre Reibungen minimiert werden.

7. Differential automatischer Alterationen einer Faltraute wird nach den Patentansprüchen 1, 2, 3, 4, 5 und 6 durch die Tatsache gekennzeichnet, dass: das externe Zahnritzel oder das Zahnkettenrad oder die Riemenscheibe des Gehäuses verzahnt ist, bekannt im bisherigen Stand der Technik mit dem Namen Sonne und mit dem Namen Krone, und seine Verbindung mit der externen Quelle der mechanischen Leistung wird ebenfalls mit einem verzahnten externen Zahnritzel oder Zahnkettenrad oder Riemenscheibe durchgeführt, bekannt im bisherigen Stand der Technik mit dem Namen Ritzel, das zur externen Quelle mechanischer Leistung gehört.

8. Differential automatischer Alterationen einer Faltraute wird nach den Patentansprüchen 1, 2, 3, 4, 5 und 6 durch die Tatsache gekennzeichnet, dass: das externe Zahnritzel oder das Zahnkettenrad oder die Riemenscheibe des Gehäuses die Form eines verzahnten Kettenrads hat, und seine Verbindung mit der externen Quelle der mechanischen Leistung erfolgt durch eine geschlossene Kette.

9. Differential automatischer Alterationen einer Faltraute wird nach den Patentansprüchen 1, 2, 3, 4, 5 und 6 durch die Tatsache gekennzeichnet, dass: das externe Zahnritzel oder das Zahnkettenrad oder die Riemenscheibe des Gehäuses die Form einer Trommel hat, und ihre Verbindung mit der externen Quelle von mechanischer Leistung erfolgt über endlose Bänder.

## Revendications

1. Le différentiel d'altérations automatique de losange pliant est un groupe d'éléments interconnectés qui exécutent des mouvements coordonnées relatifs entre eux; il se compose, d'une part, d'une coque (210, 219, 212) qui est une combinaison d'autres éléments montés et serrés suffisamment entre eux par des vis ou d'autres moyens, afin de constituer un corps solide unifié, qui se termine à l'extérieur en forme de pignon denté ou roue à chaîne dentée ou poulie et d'autre part d'un nombre de parties internes, à l'intérieur de la coque (210, 219, 212), dont certaines sont fixes et d'autres mobiles par rapport à elle; il est basé de chaque côté, sur deux roulements fixes exterieurs (232a, 232b) qui lui permettent uniquement un mouvement rotatoire dans les deux sens de rotation autour d'un axe de rotation imaginaire qui à partir de maintenant sera appelé axe de rotation central imaginaire (236); il est interconnecté avec le milieu externe, d'une part, par le pignon denté ou roue à chaîne dentée ou poulie externe de la coque (210, 219, 212), qui engrène mécaniquement avec une source externe de puissance mécanique et, d'autre part, par deux de ses parties internes qui se terminent en forme de récepteurs de l'arbre (175a, 175b), basés à l'intérieur de la coque (210, 219, 212), avec leurs douilles tournées vers l'extérieur dans des directions opposées l'une de l'autre, dans des roulements qui leur permettent seulement des mouvements rotatoires par rapport à la coque (210, 219, 212), autour de l'axe de rotation central imaginaire (236), dans les deux sens de rotation. Chacun des récepteurs de l'arbre (175a, 175b) engrène mécaniquement avec un arbre externe respective afin de pouvoir pivoter à la même vitesse que lui, mais sans possibilité de mouvement relatif entre celui ci et l'arbre externe respective; durant son fonctionnement, la source externe de puissance mécanique exerce sur celui-ci via le pignon denté ou roue à chaîne dentée ou poulie externe de la coque (210, 219, 212), un moment de torsion, à cause duquel se met en mouvement rotatoire, recevant de cette manière une puissance mécanique. Alors, il exerce des actions mécaniques sous moments de torsion, via les récepteurs de l'arbre (175a, 175b), sur les deux arbres externes les mettant en motion rotatoire, autour de l'axe de rotation central imaginaire (236) et leur donnant de cette manière la puissance mécanique, qui est reçu, mais toujours avec une repartition de puissance à eux telle, afin que leurs besoins de mouvement soient assurés et agissent comme des réactions mécaniques aux actions mécaniques que les récepteurs de l'arbre (175a, 175b), exercent sur eux.
Les parties importantes de la coque sont le noyau (219) à l'intérieur duquel les parties internes existent, deux couvercles (210, 212) de chaque côté du noyau qui se terminent en forme de moyeu (199a, 199b) à l'intérieur duquel les récepteurs de l'arbre (175a, 175b) sont basés, et le pignon denté ou roue à chaîne dentée ou poulie externe; entre les parties internes est inclus un guide mécanique oblong fixé et immobile, par rapport à la coque, sur lequel les parties mobiles engrenées peuvent être basées et sa spécification est qu'elle leur permet seulement des déplacements rectilignes bidirectionnels, sur une ligne droite imaginaire qui à partir de maintenant sera appelée ligne droite imaginaire de déplacement oblong qui est fixe par rapport au guide mécanique oblong et recoupe transversalement l'axe de rotation central imaginaire (236). Le niveau qui se détermine par l'axe de rotation central imaginaire (236) et la ligne droite imaginaire de déplacement oblong, à partir de maintenant sera appelé niveau imaginaire de déplacement oblong, est **caractérisé par le fait que**:
Un complexe des parties mobiles est également inclus, est mobile par rapport à la coque et il comprend première, deuxième, troisième, et quatrième tige (25a, 55a, 25b, 55b) de la même longueur (L1), qui sont articulées de manière successive entre elles comme une série fermée, par des jointures permanentes qui permettent des rotations entre les tiges articulées sur elles, autour de leurs premier, deuxième, troisième, et quatrième axes de rotation imaginaire respectifs (146a, 180a, 146b, 180b), qui sont parallèles à l'axe de rotation central imaginaire (236) formant ainsi une chaîne fermée de quatre tiges par quatre jointures, qui a la forme du losange et à partir de maintenant sera appelé complexe des parties mobiles de la forme du losange.
Une cinquième tige supplémentaire de même longueur (L1) que chacune de premier, deuxième, troisième, et quatrième, est également incluse dont l'une des extrémités est articulée exactement au milieu de la deuxième tige (55a), et l'autre exactement au milieu de la quatrième tige (55b) qui est parallèle à la deuxième tige, par des jointures permanentes qui permettent des rotations entre les tiges articulées sur elles, autour de leurs axes de rotation imaginaires respectifs (97a, 119a), qui sont parallèles à l'axe de rotation central imaginaire (236), ce qui permet au complexe des parties mobiles de la forme du losange d'être en mesure de subir des altérations et dans le processus de ces altérations la cinquième tige oblige le complexe des parties mobiles de la forme du losange à maintenir la forme de losange ou au cas extrême de son rétraction complet, les six axes de rotation imaginaires (146a, 146b, 180a, 180b, 97a, 119a), de toutes ses parties, de se produire sur le niveau imaginaire de déplacement oblong, mais sans jamais prendre d'autre forme.
Deux manivelles identiques (181 a, 181b), sont également incluses, chacune d'elle est constituée d'un bras, sur les extrémités duquel se trouvent des aboutissants de pivots dont les axes de rotation imaginaire ont une distance entre eux égale au rayon de la manivelle dont la longueur (R) est inférieure à la longueur (L1) de chacune de première, deuxième, troisième, et quatrième tiges (25a, 55a, 25b, 55b) du complexe des parties mobiles de la forme du losange, et sont parallèles à l'axe de rotation central imaginaire (236). Le pivot (175a) de la première manivelle (181a) et le pivot respective (175b) de la deuxième manivelle (181 b), en plus de leur forme et de leur utilisation comme pivots, sont simultanément les deux récepteurs de l'arbre (175a, 175b) et la spécification de chacun d'eux consiste à recevoir un moment de torsion par l'intermédiaire du bras de la manivelle à laquelle il appartient, et de le transporter à l'arbre externe respective. Le pivot (165a) de la première manivelle (181a) et le pivot respective (165b) de la deuxième manivelle (181 b) sont les axes de rotation des deux jointures du complexe des parties mobiles de la forme du losange, qui sont sélectionnées pour exister sur les deux extrémités de la diagonale du complexe des parties mobiles de la forme du losange, qui à partir de maintenant sera appelé diagonale des manivelles.
Une première base d'aboutement (157a) avec les pivots incorporés (141aa, 141ba) qui ont en commun le premier axe de la rotation imaginaire (146a), et une deuxième base d'aboutement (157b) avec les pivots incorporés (141ab, 141bb) qui ont en commun le troisième axe de rotation imaginaire (146b) sont également inclus. L'une des deux jointures, qui existent sur les extrémités de l'autre diagonale du complexe des parties mobiles de la forme du losange qui à partir de maintenant sera appelée diagonale de déplacement oblong, se réalise autour des pivots de la prèmiere base d'aboutement (157a) et l'autre jointure de cette diagonale se réalise autour des pivots de la deuxième base d'aboutement (157b). Les bases des aboutements (157a, 157b) sont basées comme des parties mobiles engrenées sur le guide mécanique oblong, elles gardent toujours leur premier et troisième axes de rotation imaginaire respectifs (146a, 146b), sur le niveau imaginaire de déplacement oblong et elles se limitent aux mouvements que la spécification du guide mécanique oblong définit dont la longueur disponible est plus grande que le double de la somme de la longueur du rayon (R) de l'une des manivelles (181a, 181b) et de la longueur (L1) de l'une des première, deuxième, troisième, quatrième tiges (25a, 55a, 25b, 55b) du complexe des parties mobiles de la forme du losange.
Pendant le fonctionnement, le résultat final est que: la puissance mécanique que le pignon denté ou roue à chaîne dentée ou poulie externe de la coque reçoit de la source externe de puissance mécanique, est transportée successivement via le guide mécanique oblong, via les bases des aboutements (157a, 157b) des jointures de la diagonale de déplacement oblong, via les tiges du complexe des parties mobiles de la forme du losange, via les pivots (165a, 165b) des jointures de la diagonale des manivelles et via les bras des manivelles, aux récepteurs de l'arbre (175a, 175b) qui la divisent et la distribuent aux arbres externes, les mettant en rotation, avec le ratio de leurs vitesses de rotation qui assure toujours leurs besoins de mouvement et le différentiel assure un réajustement continu et automatique des positions et vitesses relatifs momentanées entre la coque et les parties internes.

2. Le différentiel d'altérations automatiques du losange pliant, selon la revendication 1, est **caractérisé par le fait que**: pour éviter les distorsions des parties internes de la coque, la cinquième tige, est articulée dans la jointure qui existe exactement en son milieu, avec une troisième base d'aboutement (96) qui est basée comme une partie mobile engrenée sur le guide mécanique oblong, étant limité aux mouvements que la spécification du guide mécanique oblong définit et simultanément la configuration de la troisième base d'aboutement (96) permet la rotation relative entre la cinquième tige et le guide mécanique oblong autour de l'axe de rotation imaginaire respective (71) à cette jointure, qui est parallèle à l'axe de rotation centrale imaginaire (236), et il existe toujours sur le niveau imaginaire de déplacement oblong.

3. Le différentiel d'altérations automatiques de losange pliant, selon les revendications 1 et 2, est **caractérisé par le fait que**: le pignon denté ou roue à chaîne dentée ou poulie externe de la coque, depuis sa construction est l'aboutissant périphérique continu de l'un des couvercles (210), avec lequel il constitue un élément constitutif unifié et solide de la coque.

4. Le différentiel d'altérations automatique de losange pliant, selon les revendications 1 et 2, est **caractérisé par le fait que**: le pignon denté ou roue à chaîne dentée ou poulie externe de la coque, depuis sa construction, est un élément distinct, constitutif, unifié et solide de la coque.

5. Le différentiel d'altérations automatique de losange pliant, selon les revendications 1, 2, 3 et 4, est **caractérisé par le fait que**: toutes les jointures dans lesquelles participent les première, deuxième, troisième, quatrième tige (25a, 55a, 25b, 55b) du complexe des parties mobiles de la forme du losange et la cinquième tige ainsi que les deux aboutements des récepteurs de l'arbre (175a, 175b), ainsi que la jointure entre la troisième base d'aboutement (96) et la cinquième tige, sont réalisées par l'utilisation de roulement radiale roulant annulaire ou roulement radiale de glissement, afin d'exclure le contact direct entre les parties mobiles qui réalisent les mouvements rotatoires relatifs entre eux, et les frictions sont ainsi minimisées.

6. Le différentiel d'altérations automatique de losange pliant, selon les revendications 1, 2, 3, 4 et 5, est **caractérisé par le fait que**: tous les aboutements des première, deuxième et troisième bases des aboutements (157a, 157b, 96), sur le guide mécanique oblong, qui ont pour objectif la réalisation des mouvements que la spécification du guide mécanique oblong définit, qu'ils soient réalisés par l'utilisation de roulement linéaires roulant, afin d'exclure le contact direct entre les parties mobiles qui effectuent les mouvements relatifs oblong entre eux, et les frictions sont ainsi minimisées.

7. Le différentiel d'altérations automatiques de losange pliant, selon les revendications 1, 2, 3, 4, 5 et 6, est **caractérisé par le fait que**: le pignon denté ou roue à chaîne dentée ou poulie externe de la coque, est denté, connue au niveau précédent de la technique avec le nom de soleil et celui de couronne et de son engrenage avec la source externe de puissance mécanique devient via un pignon denté ou roue à chaîne dentée ou poulie externe, aussi denté, connu au niveau précédent de la technique avec le nom du pignon, qui appartient à la source externe de puissance mécanique.

8. Le différentiel d'altérations automatique de losange pliant, selon les revendications 1, 2, 3, 4, 5 et 6, est **caractérisé par le fait que**: le pignon denté ou roue à chaîne dentée ou poulie externe de la coque, a la forme d'une roue à chaîne dentée et son engrenage avec la source externe de puissance mécanique devient via une chaîne fermée.

9. Le différentiel d'altérations automatique de losange pliant, selon les revendications 1, 2, 3, 4, 5 et 6, est **caractérisé par le fait que**: le pignon denté ou roue à chaîne dentée ou poulie externe de la coque, a la forme du tambour et son engrenage avec la source externe de puissance mécanique devient via des courroies sans fin.
